# EUROPÄISCHE PATENTSCHRIFT

(11) **EP 0 679 726 B1**
(45) Veröffentlichungstag und Bekanntmachung des Hinweises auf die Patenterteilung: **28.11.2001**
(21) Anmeldenummer: 95106033.4
(22) Anmeldetag: 21.04.1995
(51) Int. Cl.: C22B 1/20, F27B 21/06, F27D 17/00, F27D 3/00

(54) **Verfahren zur Verwertung von mit organischen Rückständen versetzten Reststoffen**
Process for valorisation of waste, contaminated with organic substances
Procédé de valorisation de déchets contaminés par des polluants organiques

(30) Priorität: 25.04.1994 DE 4414321
(43) Veröffentlichungstag der Anmeldung: 02.11.1995
(73) Patentinhaber: RES Oesterreich Kommanditges. (GmbH + Co.), 21502 Geesthacht (DE)
(72) Erfinder: Oesterreich, Franz, D-21395 Bütlingen (DE); Kortmann, Heinrich A., Dr. Ing., D-38704 Liebenburg (DE); Fritsch, Andre, D-21436 Marschacht (DE); Ritz, Volker, Dipl.-Ing., D-38640 Goslar (DE)
(74) Vertreter: Heldt, Gert, Dr. Dipl.-Ing.

(56) Entgegenhaltungen:
- EP-A- 0 217 433
- EP-A- 0 239 683
- EP-A- 0 271 160
- EP-A- 0 334 413
- DE-A- 3 231 384
- DE-A- 4 109 396
- US-A- 3 909 189
- CAHIERS D'INFORMATIONS TECHNIQUES DE LA REVUE DE METALLURGIE, Bd. 86, Nr. 3, März 1989, Seiten 207-216, XP000045391 HUGUET C: "INSTRUMENTATION DES CHAINES D'AGGLOMERATION"
- Ludwig von Bogdandy und Hans-Jürgen Engell, "Die Reduktion der Eisenerze",1967, Springer-Verlag Berlin, S. 347,350-352

## Beschreibung

Die Erfindung betrifft ein Verfahren zur Verwertung von Reststoffen, die organische Rückstände und ein Gehalt an Eisen bei einer geringen Partikelgröße enthalten.

In der modernen Bearbeitungstechnik fallen eine Reihe von Reststoffen an, die nur sehr schwer zu günstigen Bedingungen für die Umwelt gelagert werden können. Zu diesen Reststoffen gehören insbesondere Schleifspäne, die mit einem hohen Anteil an nichtmetallischen Bestandteilen ein Gemisch bilden. Dieses Gemisch besteht in erster Linie aus mineralischen Bestandteilen, die aus den Schleifmitteln herrühren, und einer Flüssigkeit, die als sogenanntes Schleiföl einerseits als Kühlmittel dient und andererseits für einen relativ gleichmäßigen Abrieb auf einer Oberfläche eines zu bearbeitenden Werkstückes sorgt. Darüber hinaus sind aber auch andere Rückstände nur schwer zu entsorgen. Zu diesen gehören insbesondere auch Walzenzunder. Dieser platzt von einem zu walzenden Werkstück ab, wenn es von der Walze mit Druck beaufschlagt wird. Da die Walzen im Regelfall gefettet sind, ist der Walzenzunder mit Walzenfett gemischt. Die Verwertung des Walzenzunders ruft Schwierigkeiten hervor, da das am Walzenzunder haftende Fett bei seiner Erhitzung Dioxine erzeugt, die mit erheblichen Aufwand entsorgt werden müssen.

Problematisch ist auch die Entsorgung von Abrieben, die beispielsweise beim Sandstrahlen entstehen. Dabei sind sowohl der Abrieb als auch die zum Sandstrahlen häufig benutzten Strahlpartikel mit Rückständen behaftet, die von einer zu sandstrahlenden Fläche abgerieben werden. Dabei handelt es sich häufig um Farb- und Lackbestandteile. Diese können in erheblichem Umfange Anteile enthalten, die sich bei der Entsorgung als umweltschädlich herausstellen.

Aus der EP-A-0 334 413 ist bekannt, Schlämme, die organische Bestandteile bis zu etwa 10 % enthalten, auf ihrer Oberfläche zu verklinkern. Zu diesem Zwecke wird beispielsweise Schlick aus Häfen und Flüssen mit trockenem Rückgut in einem solchen Verhältnis gemischt, daß der Wassergehalt der Mischung einen für eine Pelletierung günstigen Wert erreicht und daß der Gehalt an organischen Bestandteilen in den Pellets bei deren vollständiger Verbrennung nicht zur Überschreitung der gewünschten Klinkertemperatur führt. Aus der dadurch entstehenden Mischung werden Pellets hergestellt, von denen einige einen kleineren und andere einen größeren Durchmesser aufweisen. Die Pellets mit dem kleineren Durchmesser werden als untere Schicht und die Pellets mit dem größeren Durchmesser als eine obere Schicht auf einem Wanderrost chargiert. Dadurch entsteht auf dem Wanderrost ein Bett von Pellets, durch das heiße sauerstoffhaltige Gase von 500 bis 900° C geleitet werden, bis mindestens die oberste Schicht des Bettes auf die Temperatur der heißen Gase aufgeheizt ist. Anschließend werden heiße sauerstoffhaltige Gase von 1100 bis 1160° C durch das Bett geleitet, bis die obere Schicht geklinkert ist. Danach werden kalte Gase durch das Bett geleitet. Nach dem Abwurf der Pellets vom Wanderrost werden die Pellets mit größerem Durchmesser abgesiebt und als Produktion abgeführt, während die Pellets mit kleinerem Durchmesser zerkleinert und als Rückgut zurückgeführt werden.

Dieses Verfahren beschränkt sich darauf, die höchstenfalls 10 % organische Bestandteile enthaltenden Schlämme, insbesondere Hafenschlick umweltfreundlich so zu verwerten, daß von diesen Schlämmen keine Gefahr für die Umwelt ausgehen kann. Zu diesem Zwecke werden die Pellets mit einer Klinkeroberfläche versehen, die verhindert, daß aus den Pellets umweltschädliche Bestandteile beispielsweise durch Auswaschen in den Boden eintreten können. Eine Trennung der einzelnen Mischungsbestandteile ist deswegen nicht notwendig, da sie gemeinsam von der Klinkerschicht umhüllt werden. Die Anwendung dieses Verfahrens auf Mischungen, deren Mischungskomponenten einer gemeinsamen Behandlung nicht zugänglich sind, ist nicht möglich.

Aufgabe der vorliegenden Erfindung ist es daher, das Verfahren der einleitend genannten Art so zu verbessern, daß eine Entsorgung der einzelnen Reststoffe ohne wesentliche Umweltverschmutzung möglich ist.

Diese Aufgabe wird erfindungsgemäß dadurch gelöst, daß den aus Schleifschlamm bestehenden Reststoffen ihre organischen Rückstände als Abgase auf einem durch Unterdruck beaufschlagten Sinterbett entzogen werden, indem ein Gemisch aus im Schleifschlamm enthaltenen Eisen- und Mineralienbestandteilen gesintert wird.

Beispiele für geeignete Reststoffe sind Schleifspäne, Zunder, Stäube und andere Rückstände aus Bearbeitungsvorgängen, z.B. vom Sandstrahlen. Durch das Sintern des Reststoffes entsteht ein Sinter, der in vielerlei Beziehung günstig verwertet werden kann. Einerseits kann er wie Eisenerzsinter bei der Roheisenerzeugung als Ausgangsprodukt verwendet werden, andererseits kann er auch als Baumaterial, beispielsweise beim Straßenbau, eingesetzt werden. In jedem Falle sind die einzelnen Bestandteile so fest in den Sinter gebunden, daß sie ohne Schwierigkeiten einer Endverwertung zugeführt werden können. Gegebenenfalls vorhandene umweltschädliche Gasbestandteile sind bereits während des Sintervorganges angefallen und einer Verwertung bzw. Entsorgung zugeführt worden. Andere Bestandteile, beispielsweise Korund, sind in den Sinter mit eingebunden und werden von der Schlacke, die bei der Roheisenerzeugung entsteht, aufgenommen. Die Einbindung derartiger Bestandteile in den Sinter ist so fest, daß der Sinter auch als Baustoff eingesetzt werden kann, ohne daß einzelne Bestandteile des Sinters beispielsweise durch die Berührung mit Grundwasser ausgespült werden können.

Weitere Vorteile des erfindungsgemäßen Verfahrens ergeben sich dadurch, daß aus organische Rückstände enthaltenden Reststoffen, insbesondere ölhaltigen Reststoffen wie Schleifspänen, beim Sintern die Rückstände in einem Arbeitsgang entzogen werden, ohne,wie z.B. in anderen Verfahren üblich, erst zu entölen und dann weiter zu verarbeiten. Beispielsweise das Öl aus Schleifspänen kann anschließend aus den beim Sintern entstehenden Abgasen durch Kondensation wiedergewonnen und einer Verwertung bzw. Entsorgung zugeführt werden. Weiterhin erhält man auf diese Weise einen Sinter, der zum Beispiel unmittelbar in einen Hochofen eingesetzt werden kann.

Gemäß einer bevorzugten Ausführungsform der Erfindung wird in einem Mischer der Reststoff aus beispielsweise Schleifspänen, Zunder und/oder Stäuben mit Zuschlägen vermischt und gemeinsam mit diesen einem Sintervorgang zugeführt. Durch das Mischen wird erreicht, daß der Reststoff mit den Zuschlägen gut vermischt ist, so daß ein einwandfreier Sintervorgang ablaufen kann. Nur sofern das an den Reststoffen anhaftende Öl und die bei der Oxidation des metallischen Eisens entstehende Oxidationswärme des metallischen Eisens nicht ausreichen, um den Reststoff auf Sintertemperatur zu erhitzen, wird der Reststoff mit einem Festbrennstoff, beispielsweise Koksgrus, vermischt. Dieser dient als zusätzlicher Energieträger und bewirkt, daß beim Sintern der Sintervorgang nach der Zündung des Gemisches selbständig weiter verlaufen kann. Die Menge des Festbrennstoffes kann die Qualität des Sinters z.B. dessen Festigkeit beeinflussen und wird zu diesem Zweck je nach Energiegehalt und Art des Reststoffes in einer kleineren oder größeren Menge zugesetzt, schließt jedoch nicht aus, ganz auf zusätzlichen Brennstoff zu verzichten.

Darüber hinaus ist es auch möglich, brennfähige Bestandteile, die aus der Kondensation eines aus dem Sintergut entweichenden Gases entstanden sind, in einer zur Abgasreinigung nachgeschalteten thermischen Nachverbrennung zu verbrennen oder das Kondensat vorhandenen Brennern der Sinteranlage als Energieträger zuzuführen.

Gemäß einer weiteren bevorzugten Ausführungsform der Erfindung wird der Reststoff vor dem Vermischen in einer Mühle vergleichmäßigt. Nach dem Zerkleinern des Reststoffes kann ein Siebvorgang folgen, der weiterhin zur Vergleichmäßigung des gesamten Mischgutes beiträgt. Insbesondere kann auf diese Weise eine Verklumpung des Reststoffs beseitigt werden.

Wenn es erforderlich ist, kann die Mischung aus Reststoff und Zuschlagstoffen vor dem Sintern getrocknet werden und zwar zweckmäßigerweise auf einem zum Sintern vorgesehenen Bereich des Rostes, möglichst unmittelbar nach deren Aufgabe auf den Rost. In besonderen Fällen kann es auch zweckmäßig sein, die Mischung vor dem Sintern zu befeuchten, z. B. mit Wasser, bis zu einem Feuchtegehalt von 25 %. Dadurch wird eine gewisse Krümeligkeit des Gemisches erzeugt. Auf diese Weise wird die Sintermischung auf eine gute Luftdurchlässigkeit in der Sinteranlage vorbereitet. Bei einzelnen Sintermischungen kann zur weiteren Unterstützung der Luftdurchlässigkeit auch ein Granuliergerät vorgesehen sein.

Der Sintervorgang verläuft auf dem Rost mit Hilfe einer automatischen Steuerung. Diese basiert in erster Linie auf Messungen mittels Thermoelementen, die unterhalb der Sintermischung von außen angeordnet sind. Die Meßergebnisse werden ausgewertet und für den folgenden Sinterzyklus zur Einhaltung der geforderten Parameter bereitgestellt.

Eine Regelung von Parametern des Sintervorgangs erfolgt entsprechend der kontinuierlichen Arbeitsweise eines Wanderrostes, auf dem der Sintervorgang stattfindet. Die Geschwindigkeit des Wanderrostes wird zum einen auf den das Sinterbett beaufschlagenden Unterdruck abgestimmt und zum anderen so geregelt, daß am Ende des Wanderrostes das Sinterbett von oben nach unten durchgesintert ist, sowie aus dem Sinterbett die organischen Rückstände entfernt sind.

Gemäß einer weiteren bevorzugten Ausführungsform der Erfindung werden beim Wanderrost die im Sinterbett auftretenden Temperaturen ständig gemessen. Dies kann mit Hilfe von Thermoelementen geschehen, die über die gesamte Länge des Wanderrostes innerhalb der Saugkästen verteilt sind und die im Sinterbett vorhandenen Temperaturen anhand der Abgastemperaturen messen.

Gemäß einer weiteren bevorzugten Ausführungsform der Erfindung wird die Vorschubgeschwindigkeit des Wanderrostes abhängig von der im Sinterbett herrschenden Temperatur geregelt. Alternativ kann diese Regelung auch abhängig von der in der Sinterzone herrschenden Temperatur, der Dicke des Sinterbettes und der Menge der durchgesaugten Luft erfolgen.

Gemäß einer weiteren bevorzugten Ausführungsform der Erfindung wird das durchgesinterte Sinterbett vom Ende des Rostes in einen das Sinterbett in Sinterstücke zerbrechenden Brecher gefördert. Die dabei entstehenden Sinterstücke sind für eine Weiterverarbeitung, insbesondere eine Klassierung und Kühlung besonders gut geeignet.

Gemäß einer weiteren bevorzugten Ausführungsform der Erfindung werden die Sinterstücke vom Ausgang des Brechers auf eine Siebeinrichtung gefördert, um dadurch Feinbestandteile, die eine Größe kleiner als z. B. 3 mm haben und als Rückgut zum Mischer transportiert werden, und Sinterteile, deren Größe mindestens dem Abstand der einzelnen Roststäbe voneinander entspricht und die zum Schutze des Rostes gegen thermische Zerstörung seiner Roststäbe als Rostbelag dienen, vom Fertigsinter zu trennen und gegebenenfalls den Fertigsinter zu klassieren.

Gemäß einer weiteren bevorzugten Ausführungsform der Erfindung wird das abgesiebte Rückgut dem Prozeß durch Eingabe in den Mischer wieder zugeführt, um z.B. die Qualität des Sinters und die Luftdurchlässigkeit der Sintermischung zu beeinflussen.

Gemäß einer weiteren bevorzugten Ausführungsform der Erfindung wird der Fertigsinter innerhalb eines Kühlers auf eine für die Weiterverarbeitung, insbesondere die Lagerung günstige Temperatur so abgekühlt, daß alle Sinterstücke eine möglichst einheitliche Temperatur besitzen.

Gemäß einer weiteren bevorzugten Ausführungsform der Erfindung wird unmittelbar auf den Rost ein ca. 3 bis 5 cm dicker Rostbelag aufgebracht, welcher den Rost vor thermischer Zerstörung schützt und das Durchsaugen der Sintermischung verhindert.

Gemäß einer weiteren bevorzugten Ausführungsform der Erfindung wird in der Sinterzone eine Temperatur von 1300 °C +/- 100 °C erzeugt.

Gemäß einer weiteren bevorzugten Ausführungsform der Erfindung wird eine parallel der Sinterzone vorauseilende Sinterfront dazu benutzt, organische Bestandteile der Sintermischung auszutreiben und an die hindurchgesaugte Luft in Form von Aerosolen und gasförmigen Bestandteilen zu binden und somit der Sintermischung die organischen Bestandteile zu entziehen, sie insbesondere zu entölen.

Je nach Sinterverlauf werden einige Gase unmittelbar verbrannt werden können. Andere Gase können entweder direkt im Luftstrom zur Verbrennung innerhalb der Zündhaube oder im Sinterbereich des Rostes rezirkuliert werden oder zunächst in einem Kondensator kondensiert werden, so daß anschließend das aus dem Kondensator austretende Kondensat als Energieträger dem Zündbrenner, dem Brenner der thermischen Nachverbrennung oder sonstigen Brennereinrichtungen zugeführt werden kann. Schließlich werden andere Abgase, welche nicht unmittelbar in irgendeiner Form im Sinterprozeß verwertet werden können, einer thermischen Nachverbrennung (TNV), in der die Gase nachverbrannt werden, und/oder einem Aktivkohle-Filter zugeführt, in dem ihre schädlichen Bestandteile sich in der Aktivkohle niederschlagen. Diese kann in einem letzten Verfahrensschritt zweckentsprechend entsorgt werden. Alternativ zum Aktivkohle-Filter kann ein Gaswäscher, bei dem die Schadstoffe mittels einer Lauge entfernt werden, oder ein Katalysator zum Einsatz kommen. Als Reinigungsstufe der Abgase kann zusätzlich auch ein Staubfilter vorgesehen werden, welcher den Staubgehalt der Abgase minimiert.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind. Dabei geben die mit Punkt versehenen ersten Ziffern der Bezifferungsziffern an, zu welcher Figur man den jeweiligen Teil der Beschreibung findet. In den Zeichnungen zeigen:

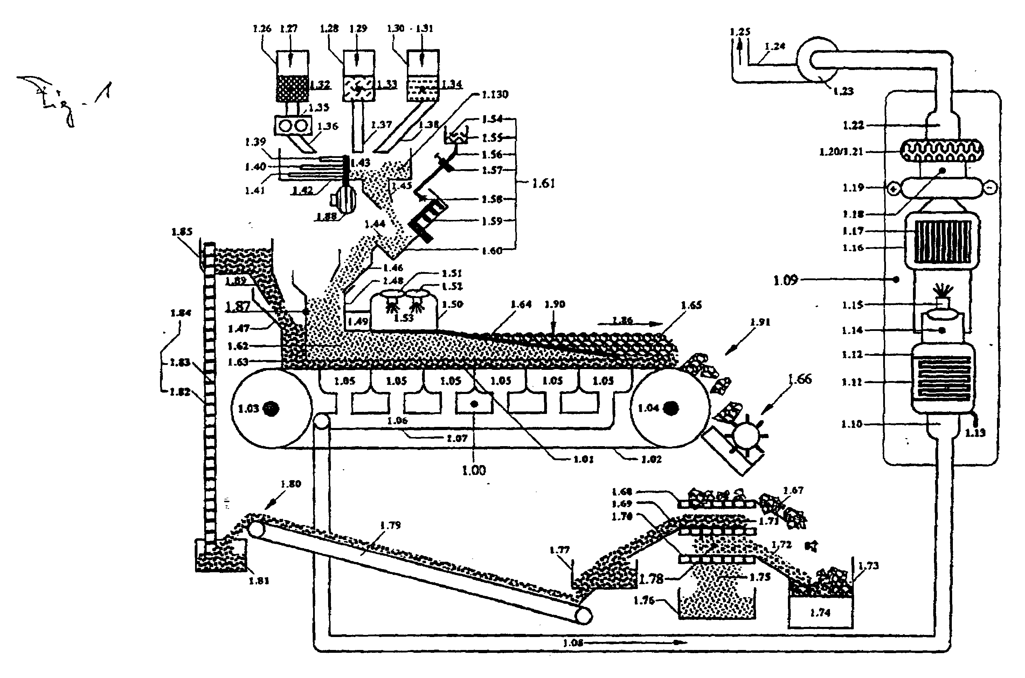

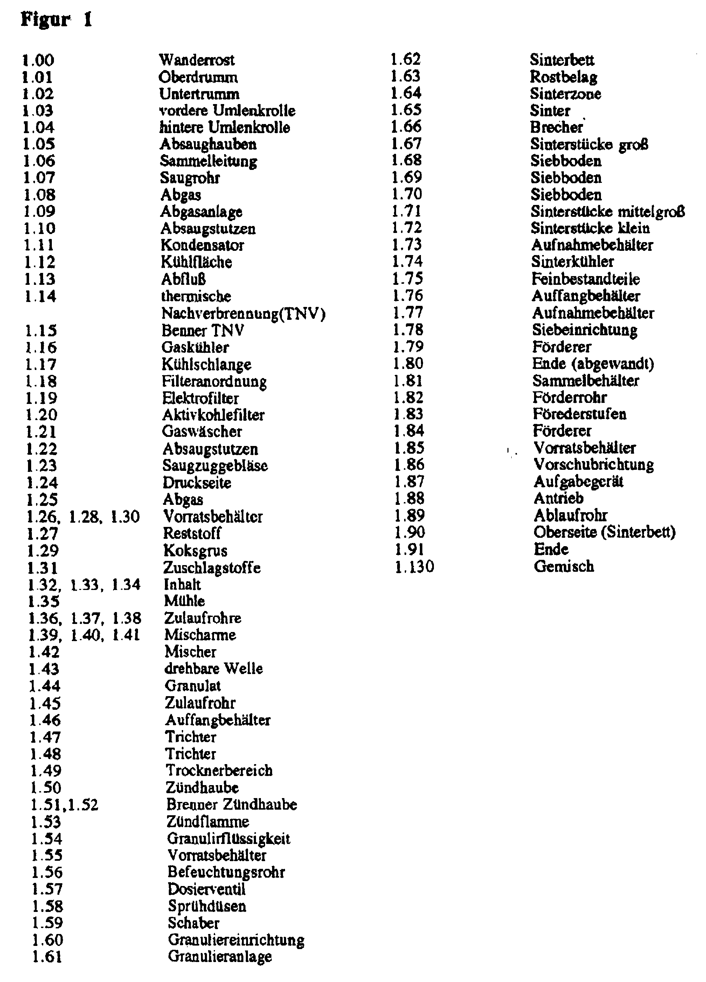

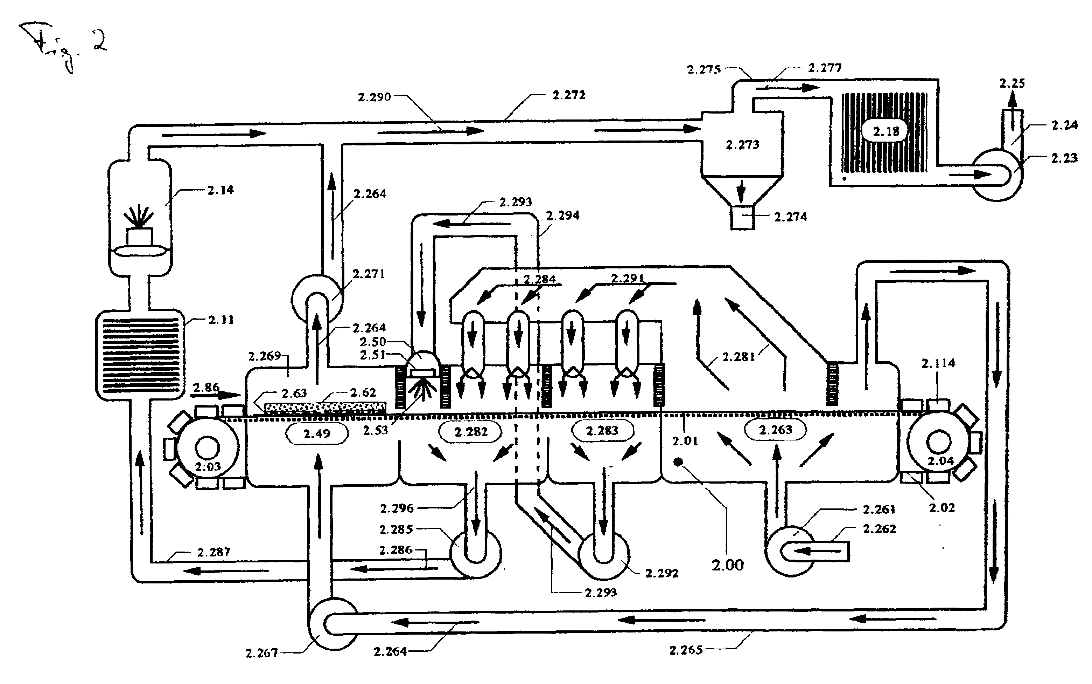

- Fig. 1:: eine schematische Darstellung einer Sinteranlage;

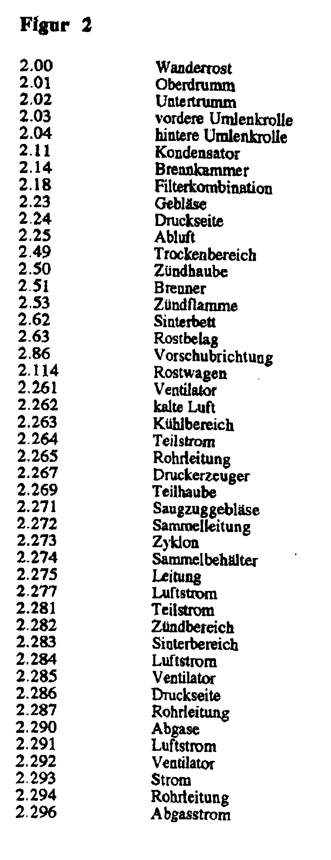

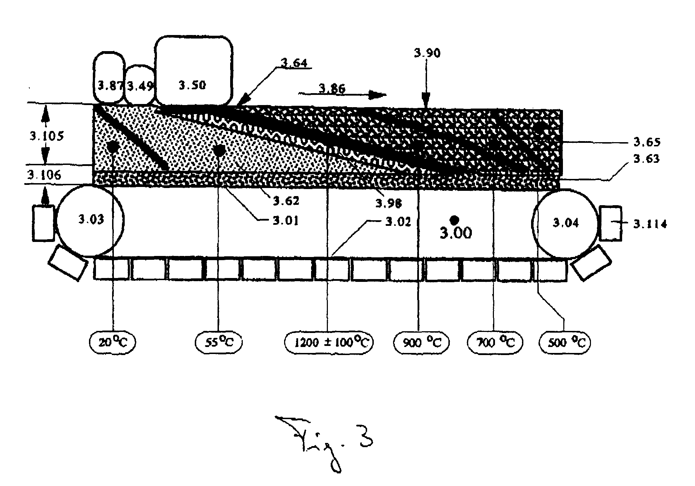

- Fig. 2:: eine schematische Darstellung spezieller Luftführungen einer anderen Sinteranlage;
(hier folgen die Seiten 9 ff der ursprünglichen Beschreibung)

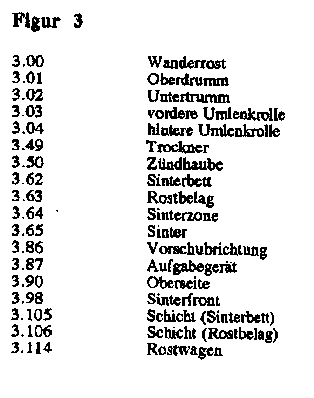

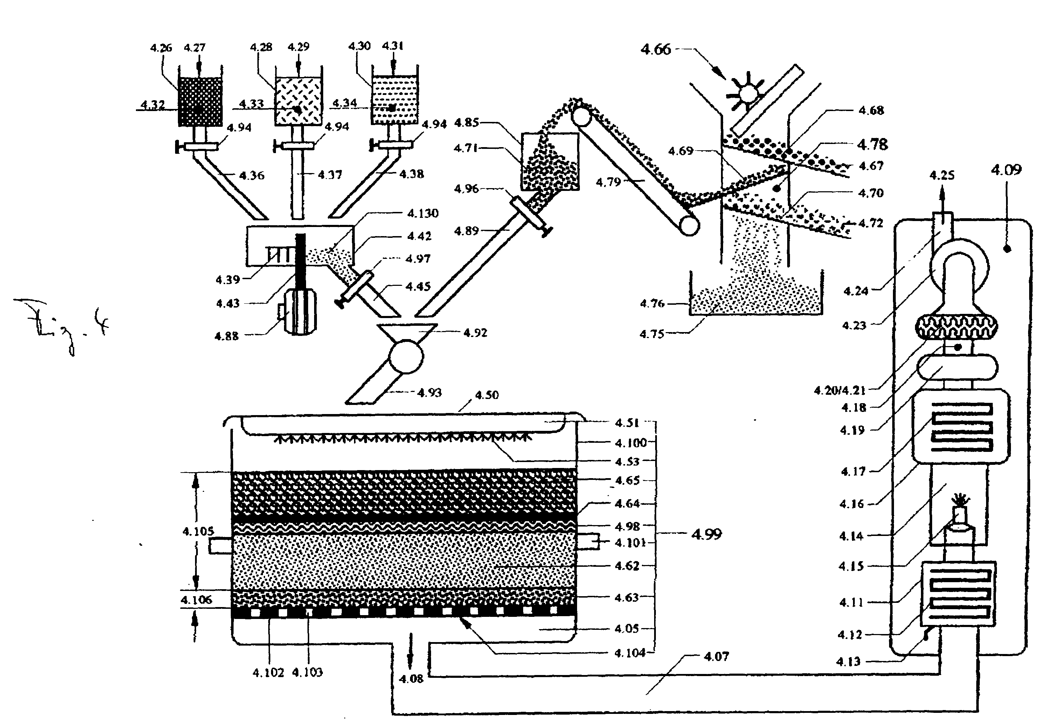

- Fig. 3:: eine vergrößerte Seitenansicht eines Wanderrostes;

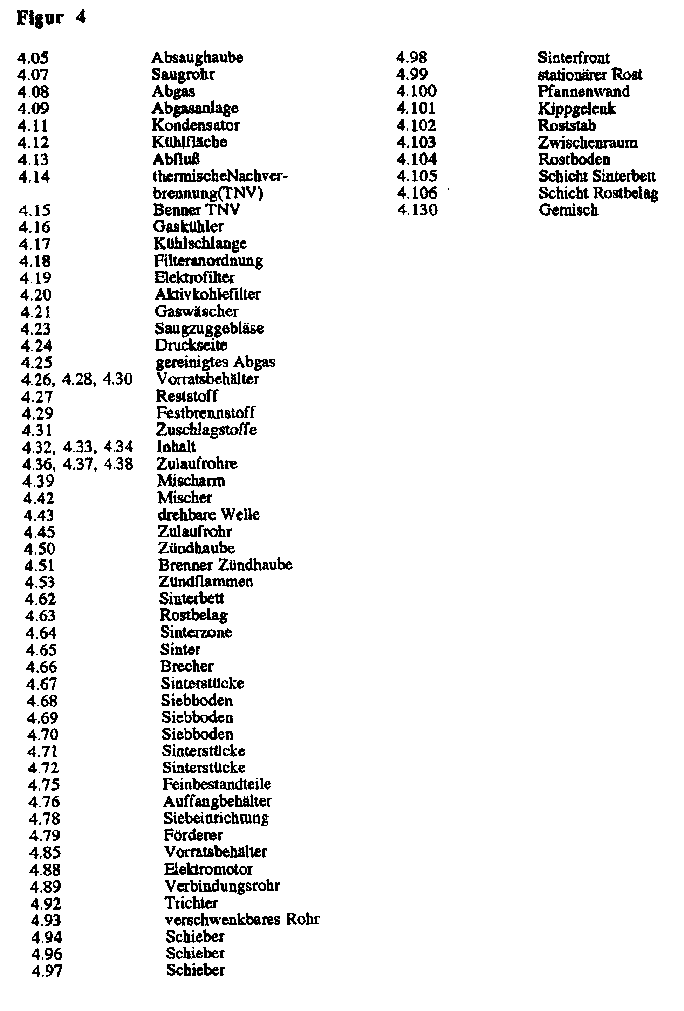

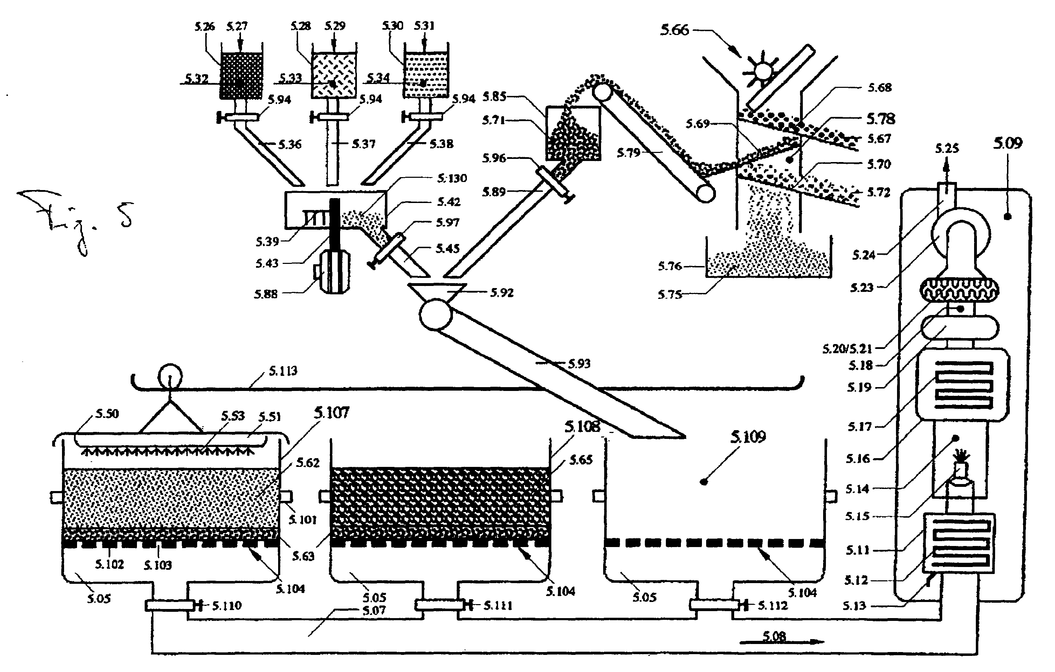

- Fig. 4:: eine schematische Darstellung einer Sinteranlage mit stationärem Rost;

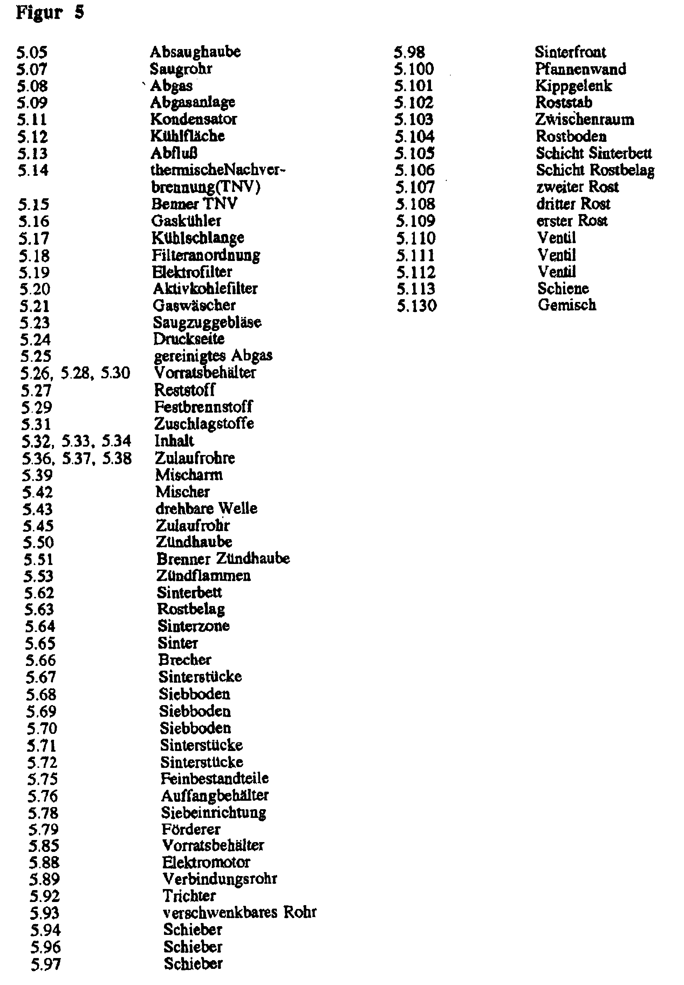

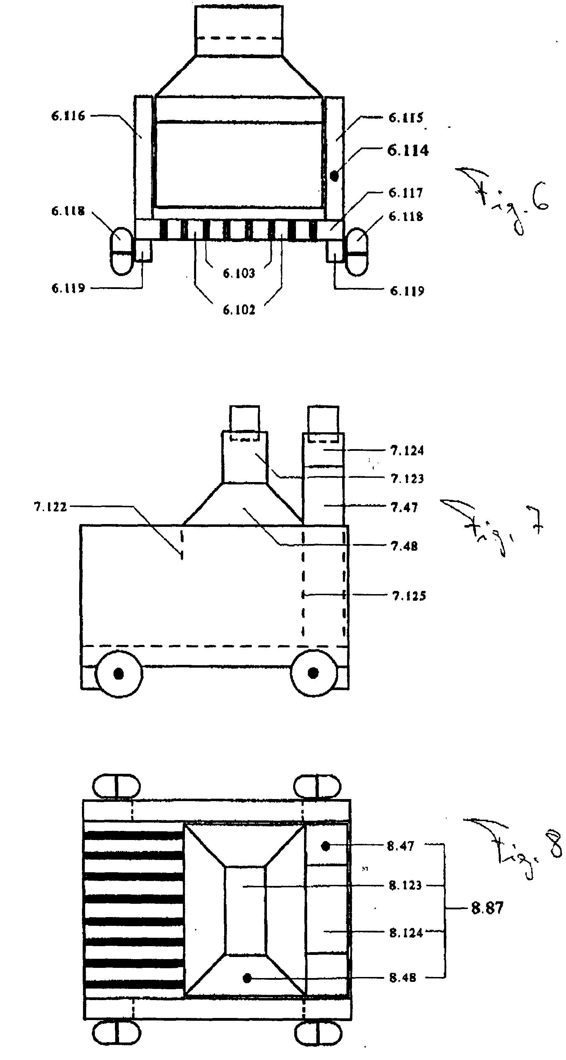

- Fig. 5:: eine schematische Darstellung einer Sinteranlage mit drei stationären Rosten;

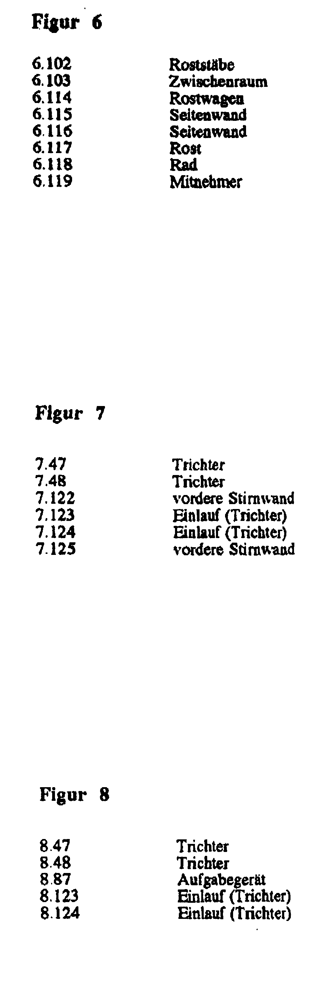

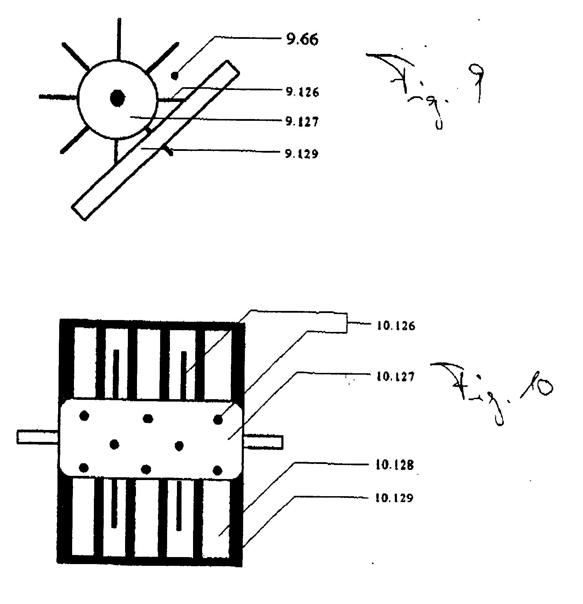

- Fig. 6:: eine Vorderansicht eines Rostwagens mit Verteilergerät;
- Fig. 7:: eine Seitenansicht eines Rostwagens mit Verteilergerät;
- Fig. 8:: eine Draufsicht eines Rostwagens mit Verteilergerät;

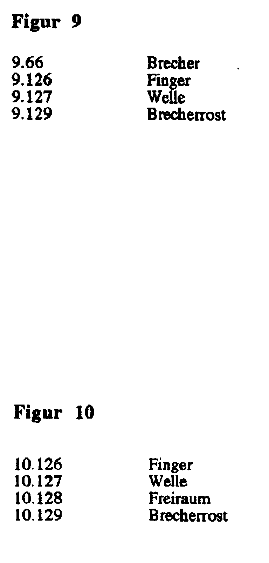

- Fig. 9:: eine Seitenansicht eines Brechers und
- Fig. 10:: eine Draufsicht auf einen Brecher.

Eine Bandsinteranlage besteht im wesentlichen aus einem Wanderrost 1.00, 2.00, 3.00, dessen Obertrumm 1.01, 2.01, 3.01 und Untertrumm 1.02, 2.02, 3.02 aus einzelnen Rostwagen 2.114, 3.114, 6.114 besteht, welche beweglich miteinander zu einer Kette verbunden sind. Jeder Rostwagen 2.114, 3.114, 6.114 besitzt Räder 6.118, die an einem Wagenboden auf Achsen drehbar gelagert sind. Dieser Wagenboden ist als ein Rost 6.117 ausgebildet, dessen Roststäbe 6.102 zwischen sich jeweils Abstände 6.103 einschließen. Die Roste 6.117 mehrerer Rostwagen 2.114, 3.114, 6.114 bilden den Wanderrost 1.00, 2.00, 3.00. Der Rostwagen 2.114, 3.114, 6.114 besitzt unterhalb seines Wagenbodens Mitnehmer 6.119, an denen der Rostwagen 2.114, 3.114, 6.114 erfaßt und über die Länge des Wanderrostes 1.00, 2.00, 3.00 transportiert wird.

Oberhalb des Wagenbodens erheben sich in Längsrichtung der Roststäbe 6.102 verlaufende Seitenwände 6.115, 6.116, die den Rost 6.117 an seinen den Rädern 6.118 zugewandten Seitenkanten begrenzen. Auf dem Rost 6.117 liegt zwischen den Seitenwänden 6.115, 6.116 ein Rostbelag 1.63, 2.63, 3.63 und ein Sinterbett 1.62, 2.62, 3.62. Der Rostwagen 2.114, 3.114, 6.114 rollt auf seinen Rädern 6.118 auf einem nicht näher dargestellten Chassis einer Sinteranlage von einer vorderen Umlenkrolle 1.03, 2.03, 3.03 in Vorschubrichtung 1.86, 2.86, 3.86 zu einer hinteren Umlenkrolle 1.04, 2.04, 3.04, wo er jeweils entweder vom Untertrumm 1.02, 2.02, 3.02 zum Obertrumm 1.01, 2.01 3.01 bzw, vom Obertrumm 1.01, 2.01, 3.01 zum Untertrumm 1.02, 2.02, 3.02 umgelenkt wird.

Beim Wanderrost 1.00 erstreckt sich unterhalb des Obertrumms 1.01 eine vorgegebene Anzahl von Absaughauben 1.05, die mit einem Saugzuggebläse 1.23 über ein Saugrohr 1.07 und mit einer unten näher beschriebenen Abgasanlage 1.09 verbunden sind. Innerhalb der Absaughauben 1.05 herrscht ein vom Saugzuggebläse 1.23 erzeugter Unterdruck, der durch die Roste 6.117 der Rostwagen 6.114 einen Luftstrom saugt. Dieser Luftstrom tritt auch durch das Sinterbett 1.62 und den als Schicht 3.106 ausgebildeten Rostbelag 1.63 hindurch, der sich auf einer dem Untertrumm 1.02 abgewandten Oberfläche des Obertrumms 1.01 erstreckt.

Die Oberfläche des Obertrumms 1.01 wird von den Roststäben 6.102 des Rostwagens 6.114 gebildet. In diesen Rostwagen 6.114 mündet über ein Aufgabegerät 1.87 ein Auffangbehälter 1.46, der über eine Granulieranlage 1.61 mit einem Mischer 1.42 verbunden ist. In diesem Mischer 1.42 sind Mischarme 1.39, 1.40, 1.41 an einer drehbaren Welle 1.43 befestigt, die von einem Antrieb 1.88 angetrieben wird. Der Antrieb 1.88 kann als ein Elektromotor ausgebildet sein.

In den Mischer 1.42 münden drei Zulaufrohre 1.36, 1.37, 1.38, von denen jedes mit jeweils einem Vorratsbehälter 1.26, 1.28, 1.30 verbunden ist. Durch die Zulaufrohre 1.36, 1.37, 1.38 kann ein in den Vorratsbehältern 1.26, 1.28, 1.30 befindlicher Inhalt 1.32, 1.33, 1.34 in den Mischer 1.42 hineingeleitet werden.

Der Inhalt 1.32 besteht aus einem Reststoff 1.27, der über eine Mühle 1.35 und ein nicht dargestelltes Sieb, die im Verlauf des Zulaufrohres 1.36 angeordnet sind, in den Mischer 1.42 geleitet wird. Durch die Mühle 1.35 und das Sieb wird der Reststoff 1.27 so vergleichmäßigt, daß er klumpenfrei in den Mischer 1.42 eingeleitet werden kann und auf diese Weise mit Hilfe des Mischers 1.42 ein konsistentes Gemisch hergestellt werden kann.

Der Inhalt 1.33 kann aus Festbrennstoff beispielsweise Koksgrus 1.29 bestehen, der in einem vorgegebenen Mischungsverhältnis zum Reststoff 1.27 in den Mischer 1.42 eingeleitet wird. Falls aufgrund der Art des Reststoffes 1.27 ein Festbrennstoff erforderlich wird, wird das Mischungsverhältnis so gewählt, daß die von dem Koksgrus 1.29 bereitgestellte Energie für einen nach der Zündung der Sintermischung selbständig verlaufenden Sintervorgang ausreicht, und um in einer sich im Sinterbett 1.62 ausbildenden Sinterzone 1.64 die zum Sintern notwendigen Temperaturen von 1300 °C +/- 100 °C einzustellen, sobald das auf den Wanderrost 1.00 aufgegebene Sinterbett 1.62 von Zündbrennern 1.51, 1.52 einer Zündhaube 1.50 mit Hilfe von Zündflammen 1.53 an seiner Oberfläche gezündet worden ist. Dabei ist der Koksgrus 1.29 innerhalb der Sintermischung etwa gleichmäßig verteilt. Durch das gesamte Sinterbett 1.62 bildet sich eine Sinterzone 1.64, die sich von einer dem Obertrumm 1.01 abgewandten Oberseite 1.90 des Sinterbettes 1.62 über eine zum Sintern erforderliche Länge des Wanderrostes 1.00 diagonal in Förderrichtung des Sinterbettes 1.62 bis zur Oberfläche des Obertrumms 1.01 erstreckt.

Der Inhalt 1.34 des Vorratsbehälters 1.30 besteht aus Zuschlagstoffen 1.31, beispielsweise aus Kalkstein, Dolomitstein und/oder Magnesiumoxid. Diese Zuschlagstoffe 1.31 dienen dazu, einem im Mischer 1.42 vorhandenen Gemisch 1.130 eine jeweils gewünschte chemische Eigenschaft zu verleihen, insbesondere eine vorgegebene Basigkeit.

Die zwischen dem Mischer 1.42 und dem Aufgabegerät 1.87 angeordnete Granulieranlage 1.61 dient dazu, das aus dem Mischer 1.42 austretende Gemisch 1.130 in ein Granulat 1.44 umzuwandeln, bevor es über einen Trichter 1.48 in folgend beschriebener Weise in den Rostwagen 6.114 gelangt. Die derart vorbereitete Sintermischung hat den Vorteil, daß sie sich in relativ lockerer schüttung als Sinterbett 1.62 ausbilden kann, so daß auch bei mäßigem Unterdruck des Saugzuggebläses 1.23 genügend Luft durch das auf dem Rost 6.117 liegende Sinterbett 1.62 und den Rostbelag 1.63 hindurchgesaugt werden kann, um eine günstige Sinterung des Sinterbettes 1.62 zu erreichen.

Die Granulieranlage 1.61 besteht aus einer Granuliereinrichtung 1.60, welche mit Sprühdüsen 1.58 und Schabern 1.59 als Reinigungseinrichtung ausgestattet ist. In die Granuliereinrichtung 1.60 mündet ein Zulaufrohr 1.45, das mit dem Mischer 1.42 verbunden ist. Darüber hinaus mündet in die Granuliereinrichtung 1.60 ein Befeuchtungsrohr 1.56, das einerseits mit den Sprühdüsen 1.58 ausgerüstet und andererseits mit einem Vorratsbehälter 1.55 verbunden ist. In dem Befeuchtungsrohr 1.56 ist ein Dosierventil 1.57 angeordnet, mit dessen Hilfe der Zulauf einer im Vorratsbehälter 1.55 vorhanden Granulierflüssigkeit 1.54 dosiert werden kann. Die Granulierflüssigkeit 1.54 wird mittels der Sprühdüsen 1.58 in Richtung auf ein zu granulierendes Gut verdüst und fördert somit den Granuliervorgang. Diese Granuliereinrichtung 1.60 kann aus einem Granulierteller, einem Granulierkonus oder aus einem Granulierrohr bestehen. Nach einer ausreichenden Verweildauer des Gemisches innerhalb der Granuliereinrichtung 1.60 wird das dadurch gebildete Granulat 1.44 über einen Auffangbehälter 1.46 an das Aufgabegerät 1.87 weitergegeben.

Das Aufgabegerät 1.87 wird zwischen den Seitenwänden 6.115, 6.116 des Rostwagens 6.114 gelagert und besitzt zwei Trichter 1.47, 1.48. Diese beiden Trichter 1.47, 1.48 sind in Längsrichtung des Wanderrostes 1.00 derart hintereinander angeordnet, daß zunächst der etwas schmaler ausgebildete Trichter 1.47 und erst anschließend der etwas breiter ausgebildete Trichter 1.48 in einen unter den Trichtern 1.47, 1.48 hindurchgezogenen Rostwagen 6.114, hineinmünden. Durch den in den anrollenden Rostwagen 6.114 zuerst einmündenden schmaleren Trichter 1.47, der mit einem Vorratsbehälter 1.85 über ein Ablaufrohr 1.89 verbunden ist, wird zunächst der Rostbelag 1.63 auf den Rost 6.117 aufgegeben. Anschließend rollt der Rostwagen 6.114 unter den größeren Trichtern 1.48, der unmittelbar oder über die Granulieranlage 1.61 mit dem Mischer 1.42 verbunden ist. Über diesen Trichter 1.47 wird sodann das Sinterbett 1.62 auf den bereits auf dem Rost 6.117 aufliegenden Rostbelag 1.63 aufgeschichtet.

Das aus den beiden Trichtern 1.47, 7.47, 1.48, 7.48 bestehende Aufgabegerät hat zwei Aufgaben. Es muß zum einen mittelgroße Sinterstücke 1.71 als Rostbelag 1.63 in einer Schichtdicke von ca. 3 bis 5 cm gleichmäßig auf der der Zündhaube 1.50 zugewandten Oberfläche des Obertrumms 1.01 aufgeben, um den jeweiligen Rost 6.117 der Rostwagen 6.114, 3.114 vor zu hohen Temperaturen zu schützen. Der Rostbelag verhindert, daß die Sintermischung durch die zwischen den Roststäben 6.102 liegenden Zwischenräume 6.103, hindurchgesaugt wird. Die zweite Aufgabe des Aufgabegerätes 1.87 besteht darin, auf den auf dem Rost 6.117 aufgebrachten Rostbelag 1.63 das Gemisch 1.130 gegebenenfalls als Granulat 1.44 über den Auffangbehälter 1.46 als Sinterbett 1.62 in einer definierten Schichthöhe aufzubringen. Die beiden Trichter 1.47, 1.48 sind jeweils in ihrem Abstand zur Oberfläche des Obertrumms 1.01 verstellbar zwischen den Seitenwänden 6.115, 6.116 angebracht, um durch ein Verstellen des jeweiligen Trichters 1.47, 1.48 die Schichtdicke des Rostbelages 1.63 und/oder des Sinterbettes 1.62 oder des gesamten Sinterbettes 1.62 einschließlich des Rostbelages 1.63 variieren zu können. Dabei besitzt der zum Aufbringen des Rostbelages 1.63 vorgesehene Trichter 1.47 eine in Vorschubrichtung 1.86, 2.86, 3.86 des Wanderrostes 1.00 vordere Stirnwand 7.125, die in Richtung auf die Oberfläche des Obertrumms 1.01 verkürzt ist. Dabei entspricht die Verkürzung einer für den Rostbelag 1.63 definierten Dicke der Schicht 3.106. Der Trichter 7.48 zur Aufgabe des Sinterbettes 1.62 ist in gleicher Höhe wie die vordere Stirnwand 7.125 des Trichters 7.47 am Trichter 7.47 verstellbar angebracht, um den Austritt des Rostbelages 1.63 gewährleisten zu können. Außerdem wird durch diese Anordnung beider Trichter 1.47, 7.47, 1.48, 7.48 gewährleistet, daß beim Verstellen der für den Rostbelages 1.63 vorgesehenen Dicke der Schicht 3.106 die Schichtdicke des Sinterbettes 1.62 nicht beeinflußt sondern nur verlagert wird. Durch die Höhenverstellmöglichkeit des Trichters 1.48, 7.48 sowie durch seine in Vorschubrichtung 1.86, 2.86, 3.86 des Wanderrostes 1.00 verkürzte vordere Stirnwand 7.122 ist die Höhe der das Sinterbett bildenden Schicht variierbar.

In Längsrichtung des Wanderrostes 1.00 ist zwischen dem Aufgabegerät 1.87 und der Zündhaube 1.50 ein Trockner 1.49, 3.49 angebracht, mit dessen Hilfe das auf dem Wanderrost 1.00 ausgebreitete Gemisch getrocknet wird. Unterhalb dieses Trockners 1.49 ist eine Absaughaube 1.05 vorgesehen, die mit dem Saugrohr 1.07 verbunden ist.

Nachdem das Sinterbett 1.62 durch die in der Zündhaube 1.50 vorgesehenen Brenner 1.51, 1.52 an seiner Oberfläche gezündet ist, findet der Sintervorgang zunächst nur im Bereich der der Zündhaube 1.50 zugewandten Oberseite 1.90 des Sinterbettes 1.62 statt. Aufgrund des durch das Sinterbett 1.62, 3.62 hindurchgesaugten Luftstromes und des Vorschubes des Wanderrostes 1.00 in Vorschubrichtung 1.86 wird die Sinterzone 1.64 mit zunehmender Entfernung von der Zündhaube 1.50, 3.50 auf dem Wanderrost 1.00 immer tiefer in das Sinterbett 1.62 vordringen, bis sie im Bereich der Umlenkrolle 1.04, 3.62 am Ende des Wanderrostes 1.00 die Oberfläche des Wanderrostes 1.00 erreicht hat, so daß aus dem Sinterbett 1.62, 3.62 die organischen Rückstände entfernt sind. Der Sinterzone 1.64, 3.64, in der das Sinterbett 1.62 gesintert wird, eilt parallel zur Saugrichtung der Abgase 1.08 eine Sinterfront 3.98 voraus, welche organische Bestandteile, insbesondere Öl aus der Sintermischung austreibt.

An das Saugrohr 1.07 schließt sich die Abgasanlage 1.09 an, die im wesentlichen aus einem Absaugstutzen 1.10, einem Kondensator 1.11, einer thermischen Nachverbrennung 1.14 und einer Filteranordnung 1.18 besteht. Dabei steht das Saugrohr 1.07 über den Absaugstutzen 1.10 mit dem Kondensator 1.11 in Verbindung, durch den ein aus dem Sinterbett 1.62 abgesaugtes Abgas 1.08 mit Hilfe des Saugzuggebläses 1.23 durchgesaugt wird. Durch den Kondensator 1.11 erstreckt sich eine Kühlfläche 1.12, an der kondensierbare Gasbestandteile kondensiert und über einen Abfluß 1.13 einer weiteren Nutzung zugeführt, beispielsweise zur Unterstützung des Sinterverfahrens eingesetzt werden.

Dem Kondensator 1.11 ist die thermische Nachverbrennung 1.14 nachgeschaltet, die solche Gasbestandteile aus dem Abgas 1.08 verbrennt, die im Kondensator 1.11 nicht kondensiert werden konnten. Die aus der thermischen Nachverbrennung 1.14 austretenden Abgase werden in einem nachgeschalteten Gaskühler 1.16, durch den sich beispielsweise eine Kühlschlange 1.17 erstrecken kann, gekühlt, bevor sie in die Filteranordnung 1.18 eintreten, die dem Gaskühler 1.16 nachgeschaltet ist.

Diese Filteranordnung 1.18 kann aus einem Elektrofilter 1.19 und einem Aktivkohlefilter 1.20 bestehen, die hintereinander geschaltet sind. Statt des Aktivkohlefilters 1.20 kann auch ein Gaswäscher 1.21 oder Katalysator eingesetzt werden. Im Elektrofilter 1.19 werden Feststoffpartikel aus dem aus dem Sinterbett 1.62 abgesaugten Abgas 1.08 ausgeschieden. Der Aktivkohlefilter 1.20 bzw. Gaswäscher 1.21 oder Katalysator nimmt andere gesundheitsschädliche Gasbestandteile, beispielsweise Dioxine auf, die auf andere Weise nicht entsorgt werden können.

An dem der Umlenkrolle 1.04 benachbarten Ende des Wanderrostes 1.00 fällt das inzwischen auf seinem gesamten Querschnitt durchgesinterte Sinterbett 1.62 in einem noch grobstückigen Zustand in einen Brecher 1.66, 9.66 der beispielsweise als ein Stachelbrecher ausgebildet sein kann. Dabei werden auf einer Welle 9.127, 10.127 radial nach außen stehende Finger 9.126, 10.126 so angeordnet, daß die Finger 9.126, 10.126 Freiräume 10.128 zwischen sich einschlieβen. Im Drehbereich der Finger 9.126, 10.126 ist ein mit Freiräumen 10.128 versehener Brecherrost 9.129, 10.129 so angeordnet, daß beim Drehen der Welle 9.127, 10.127 die Finger 9.126, 10.126 durch im Brecherrost 9.129, 10.129 vorgesehene Freiräume 10.128 hindurchgreifen.

Die vom Sinterbett 1.62, 9.66 abbrechenden Sinterstücke fallen in den Brecher 1.66 und werden von den Fingern 9.126, 10.126 in Richtung auf die Freiräume 10.128 des Brecherrostes 9.129, 10.129 mitgenommen. Dabei werden die Sinterbrocken von den Fingern 9.126, 10.126 in den Freiräumen 10.128 des Brecherrostes 9.129, 10.129 zerkleinert und dabei in die durch die Breite der Freiräume 10.128 definierte Größe gebrochen. Das Zerbrechen des Sinterbettes 1.62 wird dadurch begünstigt, daß dieses im Bereich der Umlenkrolle 1.04 vom Wanderrost 1.00 abbricht.

Nachdem der Sinter 1.65 den Brecher 1.66 verlassen hat, wird er einer Siebeinrichtung 1.78 zugeführt und klassiert. Dabei besitzt die Siebeinrichtung 1.78 einen die Sinterstücke aufnehmenden Siebboden 1.68, auf dem große Sinterstücke 1.67 von den übrigen Sinterstücken getrennt und in einen Aufnahmebehälter 1.73 abgeleitet werden. Dem Siebboden 1.68 sind weitere Siebböden 1.69, 1.70 nachgeschaltet, die gemeinsam mit dem Siebboden 1.68 die klassierende Siebeinrichtung 1.78 darstellen. Auf dem dem Siebboden 1.68 nachgeschalteten Siebboden 1.69 werden mittelgroße Sinterstücke 1.71 abgesiebt und in einen Aufnahmebehälter 1.77 eingeleitet. Der Transport dieser Sinterstücke 1.71 geschieht auf einem Förderer 1.79. Dieser Förderer 1.79 ist mit seinem dem Aufnahmebehälter 1.77 abgewandten Ende 1.80 einem Sammelbehälter 1.81 zugewandt, in dem die auf dem Förderer 1.79 transportierten mittelgroßen Sinterstücke 1.71 eingefüllt werden. Zwischen diesem Sammelbehälter 1.81 und einem Vorratsbehälter 1.85 ist ein weiterer Förderer 1.84 vorgesehen, der die Sinterstücke 1.71 vom Sammelbehälter 1.81 in den Vorratsbehälter 1.85 fördert. Dieser Förderer 1.84 kann als ein Senkrechtförderer ausgebildet sein, in dem auf quer zur Richtung eines Förderrohres 1.82 verlaufenden Förderstufen 1.83 die Sinterstücke 1.71 in den Vorratsbehälter 1.85 gefordert werden.

Aus dem Vorratsbehälter 1.85 werden die Sinterstücke 1.71 als Rostbelag auf die Roststäbe 6.102 des Rostwagens 3.114, 6.114 aufgebracht. Zu diesem Zwecke ist das Aufgabegerät 1.87 mit einem Einlauf 8.124 versehen, der über ein Ablaufrohr 1.89 mit dem Vorratsbehälter 1.85 verbunden ist. Dieser Einlauf 8.124 ist mit einem sich über die Breite des Rostes 6.117 erstreckenden Trichter 1.47, 8.47 verbunden, über den die Sinterstücke 1.71 zum Schutz der Roststäbe 6.102 gegen Überhitzung über die gesamte Breite des Rostes 6.117 verteilt werden. Dabei wird die Dicke der mit den Sinterstücken 1.71 erzeugten Schicht so gewählt, daß die Roststäbe 6.102 zuverlässig gegen Überhitzung geschützt sind.

Aus dem Siebboden 1.69 treten in Richtung auf den Siebboden 1.70 kleine Sinterstücke 1.72 aus, die ebenfalls in den Aufnahmebehälter 1.73 eingeleitet werden. Diese Sinterstücke 1.72 bilden gemeinsam mit den Sinterstücken 1.67 das zur Weiterverarbeitung geeignete Produkt.

Der Siebboden 1.70 läßt in Richtung auf einen weiteren Auffangbehälter 1.76 lediglich Feinbestandteile 1.75 hindurchtreten, die als Rückgut in den Mischer 1.42 über ein geeignetes Fördergerät aufgegeben werden. Diese Feinbestandteile 1.75 verbessern unter anderem das Luftdurchlässigkeitsverhalten des auf dem Wanderrost 1.00 aufzubringenden zu sinternden Gemisches 1.130 und somit die Qualität des Sinters.

Die kleinen Sinterstücke 1.72 werden als Siebklassierung mit einer Korngröße von ca. 3 bis 10 mm als Produkt dem Aufnahmebehälter 1.73 zugeführt. Diese Sinterstücke 1.72 stellen gemeinsam mit den groben Sinterstücken 1.67 das gewünschte Endprodukt dar.

Die Sinterstücke 1.71 mit der Korngröße von ca 10 bis 20 mm dienen dem Sintervorgang als Rostbelag 1.63.

Alle Korngrößen über 20 mm können je nach weiterem Verwendungs zweck entweder weiter klassiert oder komplett einem Sinterkühler 1.74 zugeführt werden. Im Sinterkühler 1.74 werden die Sinterstücke auf eine für die weitere Bearbeitung günstige Temperatur abgekühlt.

Neben einer Kühlung im Sinterkühler 1.74 wird der Sinter 1.65 bereits in seinem oberen Teil durch den Luftstrom abgekühlt. Der im Sinterkühler 1.74 gekühlte Sinter wird einer Endverwertung zugeführt, beispielsweise wie ein gesintertes Eisenerz mit Zuschlagstoffen in einen Hochofen oder eine andere Anlage eingefüllt, die der Eisenerzverhüttung dient. Sollte der Sinter 1.65 noch Anteile beinhalten, die für eine Roheisengewinnung unzuträglich sind, beispielsweise Legierungsbestandteile, so kann der Sinter 1.65 auch für andere Zwecke verwendung finden, beispielsweise als Baustoff zur Herstellung von Straßen. Die gesamten festen Bestandteile der Sintermischung sind in den Sinter so fest eingebunden, daß sie auch unter dem Einfluß von Grundwasser nicht aus dem Sinter 1.65 ausgewaschen werden können.

Eine Regelung des Sintervorganges findet mit Hilfe von Thermoelementen statt, die über die gesamte Länge des Wanderrostes 1.00 in den Absaughauben 1.05 unterhalb des Obertrumms 1.01 angeordnet sind und ständig die in den Abgasen 1.08 vorhandenen Temperaturen messen. Entsprechend diesen Messungen werden der durch das Sinterbett 1.62 hindurchgesaugte Luftstrom, die Dicke der Schicht 3.105 des Sinterbettes 1.62 und die Vorschubgeschwindigkeit des Wanderrostes 1.00 geregelt.

Es ist jedoch auch möglich, durch spezielle Luftführungen den Verbrauch der Anlage an Wärmeenergie durch Rezirkulation von Teilströmen so gering wie möglich zu halten. Zu diesem Zwecke wird beispielsweise mit Hilfe eines Ventilators 2.261 kalte Luft 2.262 angesaugt, um mit ihrer Hilfe das Sinterbett 1.62, 2.62, 3.62 in einem dem Sinterbereich 2.283 nachfolgenden Kühlbereich 2.263 abzukühlen. Dabei heizt sich die kalte Luft 2.262 auf. Ein Teilstrom 2.264 der im Kühlbereich 2.263 aufgeheizten Luft wird über eine Rohrleitung 2.265 von einem Druckerzeuger 2.267 in Richtung auf einen Trockenbereich 2.49 im vorderen Bereich des Wanderrostes 2.00 und des auf ihm liegenden Rostbelages 2.63 des Sinterbettes 2.62 durchgedrückt. Oberhalb des Obertrumms 2.01 ist in diesem Trockenbereich 2.49 eine Teilhaube 2.269 vorgesehen, in der der Teilstrom 2.264 gesammelt wird, nachdem er durch das Sinterbett 2.62 und den Rostbelag 2.63 hindurchgetreten ist und das Sinterbett 2.62 getrocknet hat. Aus der Teilhaube 2.269 tritt der Teilstrom 2.264 über einen Auslaßstutzen in ein Saugzuggebläse 2.271, das diesen Teilstrom 2.264 in eine Sammelleitung 2.272 fördert. In dieser Sammelleitung 2.272 ist ein Zyklon 2.273 angeordnet, in dem gegebenenfalls Feststoffe ausfallen, die von dem durch die Sammelleitung 2.272 transportierten Luftstrom 2.290 mitgefördert werden. Diese Feststoffe fallen im Zyklon 2.273 in einen Sammelbehälter 2.274 aus dem sie entnommen und dem übrigen Kreislauf wieder zugeführt werden können.

Mit dem Zyklon 2.273 ist über eine Leitung 2.275 eine Filterkombination 2.18 verbunden, durch den der durch die Leitung 2.275 geförderte Luftstrom 2.277 von einem weiteren Gebläse 2.23 hindurchgesaugt wird. In dieser Filterkombination 2.18 werden schädliche Bestandteile aus dem Luftstrom 2.277 herausgefiltert, so daß das Gebläse 2.23 auf einer Druckseite 2.24 gereinigte Abluft 2.25 abgibt, die umweltverträglich ist.

Ein weiterer Teilstrom 2.281, der sich im Bereich des Kühlbereiches 2.263 beim Abkühlen des Sinterbettes 2.62 erwärmt, wird in Richtung auf einen Zündbereich 2.282 und einen Sinterbereich 2.283 des Wanderrostes geleitet. Im Bereich des Zündbereiches 2.282 trägt ein Luftstrom 2.284 des Teilstromes 2.281 dazu bei, daß dem auf dem Wanderrost liegenden Gemisch die zur Verbrennung erforderliche Luft zugeführt wird. Dieser Luftstrom 2.284 wird durch das im Bereich des Zündbereiches 2.282 liegende Gemisch 2.62 von einem Ventilator 2.285 hindurchgesaugt, der auf seiner Druckseite 2.286 über eine Rohrleitung 2.287 mit einem Kondensator 2.11 und einer Brennkammer 2.14 verbunden ist. In dem Kondensator 2.11 werden Aerosole aus dem Abgas ausgeschieden und in der Brennkammer 2.14 werden brennbare und toxische Bestandteile eines Abgasstromes 2.296 verbrannt, der aus dem Zündbereich 2.282 und dem Sinterbereich 2.283 stammen kann. Dabei entstehen Abgase 2.290, die über die Sammelleitung 2.272 in den Zyklon 2.273 und die Filterkombination 2.276 abgeleitet werden.

Durch den Sinterbereich 2.283 wird ein Luftstrom 2.291 der ein Teil des Teilstromes 2.281 ist, von einem Ventilator 2.292 hindurchgesaugt. Auch dabei entsteht ein Strom 2.293 brennbarer Abgase, die eine der Sintertemperatur entsprechende Temperatur besitzen. Der Ventilator drückt diesen Strom 2.293 über eine Rohrleitung 2.294 in einen oberhalb des Zündbereiches 2.282 in der Zündhaube 2.50 angeordneten Brenner 2.51, dessen Zündflammen 2.53 in Richtung auf das auf dem Wanderrost liegende Sinterbett 2.62 austreten. Diese Zündflammen 2.53 zünden das Sinterbett 2.62. Der Luftstrom 2.293 dient zur Versorgung des Brenners 2.51. Darin enthaltene brennbare Abgasbestandteile können im Brenner 2.51 verbrannt werden. Die bei der Verbrennung entstehenden heißen Verbrennungsgase 2.296 werden vom Ventilator 2.285 über die Rohrleitung 2.287 und dem Kondensator 2.11 zur Brennkammer 2.14 gefördert.

Statt eines Wanderrostes 1.00 kann auch ein stationärer Rost 4.99 Verwendung finden. Grundsätzlich verläuft der Sintervorgang auf dem stationären Rost 4.99 in ähnlicher Weise wie auf dem Wanderrost 1.00. Zu diesem Zwecke ist oberhalb des stationären Rostes 4.99 ein Mischer 4.42 vorgesehen, der über Vorratsbehälter 4.26, 4.28, 4.30 befüllt wird. Diese Vorratsbehälter 4.26, 4.28, 4.30 enthalten die im Mischer 4.42 zu mischenden Produkte, nämlich Reststoffe, Festbrennstoff und Zuschlagstoffe. Diese werden über die Zulaufrohre 4.36, 4.37, 4.38 in den Mischer 4.42 eingegeben. Aus dem Mischer 4.42 tritt das gemischte Produkt 4.130 über ein Verbindungsrohr 4.45 in einen Trichter 4.92 aus, wenn ein entsprechender Schieber 4.97 geöffnet wird, der das Verbindungsrohr 4.45 gegenüber dem stationären Rost 4.99 verschließt. Der Trichter 4.92 ist über ein verschwenkbares Rohr 4.93 mit dem Stationären Rost 4.99 verbunden. Das verschwenkbare Rohr 4.93 ermöglicht ein gleichmäßiges Befüllen des stationären Rostes 4.99.

Darüber hinaus mündet in den Trichter 4.92 ein weiteres Verbindungsrohr 4.89, das den Trichter 4.92 mit dem Vorratsbehälter 4.85 verbindet. Innerhalb des Verbindungsrohres 4.89 ist ein Schieber 4.96 vorgesehen, mit dessen Hilfe der Auslaß von Rostbelag 4.63 aus dem Vorratsbehälter 4.85 gesteuert werden kann.

Zum Befüllen eines stationären Rostes 4.99 der mit einem Rostboden 4.104 ausgerüstet ist, wird der Schieber 4.96 geöffnet. Nunmehr kann der Rostbelag 4.63 über das verschwenkbare Rohr 4.93 auf dem Rostboden 4.104 verteilt werden. Dieser Rostboden 4.104 enthält eine Schichtdicke 4.106 von etwa 3 bis 5 cm, um die Roststäbe 4.102 vor thermischer Zerstörung zu schützen und zu verhindern, daß die Sintermischung vom Unterdruck des Saugzuggebläses 4.23 durch den Rostboden 4.104 hindurchgesaugt wird.

Nachdem der Rostbelag 4.63 in entsprechender Dicke der Schicht 4.106 auf dem Rostboden 4.104 ausgebildet worden ist, wird der Schieber 4.96 des Verbindungsrohres 4.89 geschlossen und der Schieber 4.97 des Verbindungsrohres 4.45 geöffnet, so daß die im Mischer 4.42 hergestellte Sintermischung 4.130 durch das verschwenkbare Rohr 4.93 in Richtung auf den bereits auf dem Rost 4.104 liegenden Rostbelag 4.63 austreten und sich auf dem Rostbelag 4.63 ablagern kann. Dabei wird eine Schichtdicke 4.105 erzeugt, die der Höhe der Pfannenwand entsprechen kann.

Nachdem das aus dem geöffneten Verbindungsrohr 4.45 in Richtung auf den Trichter 4.92 austretende Gemisch 4.130 den Rostbelag 4.63 mit einem Sinterbett 4.62 bedeckt hat, wird das Verbindungsrohr 4.45 mit Hilfe des Schiebers 4.97 verschlossen. Sodann wird über dem stationären Rost 4.99 die Zündhaube 4.50 in Richtung auf das Sinterbett 4.62 angeordnet, aus der Zündflammen 4.53 in Richtung auf das Sinterbett 4.62 austreten und dieses an seiner Oberfläche zünden. Dabei wird unterhalb des stationären Rostes 4.99 in der Absaughaube 4.05 ein Unterdruck erzeugt, der ausreicht, um die von den Zündflammen 4.53 erzeugte Sinterzone 4.64 durch das Sinterbett 4.62 hindurchzusaugen. Auf diese Weise wird das gesamte Sinterbett 4.62 gesintert. Die Sinterzone 4.64 verläuft beim stationären Rost 4.99 parallel zum Rostboden 4.104. Auch bei diesem Verfahren verläuft in Saugrichtung parallel vor der Sinterzone 4.64 eine Sinterfront 4.98.

Nachdem die Sinterzone 4.64 durch das Sinterbett 4.62 hindurchgesintert ist und den Rostboden 4.104 erreicht hat, wird der auf diese Weise entstandene Sinter 4.65 durch weiteres hindurchsaugen von Luft gekühlt und danach durch verschwenken des stationären Rostes 4.99 um Kippgelenke 4.101, die an der Pfanne befestigt sind, abgenommen und beispielsweise in einem Brecher 4.66 gebrochen. Sodann wird er fraktioniert gesiebt, der zum Schutz der Roststäbe 4.102 notwendige Rostbelag gewonnen und gegebenenfalls entstehende Feinbestandteile 4.75 als Rückgut dem Mischer 4.42 wieder zugeführt.

Die dabei entstehenden Abgase 4.08 werden durch das Saugzuggebläse 4.23 über das Saugrohr 4.07 abgesaugt. Dabei treten die Abgase 4.08 durch den Kondensator 4.11 und die thermische Nachverbrennung 4.14 in den Elektrofilter 4.19 und den Aktivkohlefilter 4.20 Gaswäscher 4.21 oder Katalysator. Das verbleibende Abgas verläßt auf der Druckseite 4.24 des Saugzuggebläses 4.23 als gereinigtes Abgas 4.25 die Anlage.

Zweckmäßigerweise werden mehrere, beispielsweise drei stationäre Roste 5.107, 5.108, 5.109 in einer gemeinsamen Anlage betrieben. Dabei wird ein erster stationärer Rost 5.109 über das verschwenkbare Rohr 5.93 mit dem Rostbelag 5.63 und dem Sinterbett 5.62 bedeckt. Zweckmäßigerweise steht dazu ein Trichter 5.92 zur Verfügung, der über das verschwenkbare Rohr 5.93 mit den Rosten 5.107, 5.108, 5.109 verbunden werden kann.

Bei geöffnetem Schieber 5.96 tritt durch das Verbindungsrohr 5.89 der Roststäbe 5.102 schützende Rostbelag 5.63 aus dem Vorratsbehälter 5.85 in Richtung auf den Trichter 5.92 aus und wird über das verschwenkbare Rohr 5.93 auf den Rostboden 5.104 des Rostes 5.109 geleitet und darauf mit einer Schichtdicke von ca 3 bis 5 cm verteilt.

Sobald sich die gewünschte Schicht 5.106 des Rostbelages 5.63 ausgebildet hat, wird der Schieber 5.96 geschlossen und der Schieber 5.97 geöffnet. Nunmehr tritt über das Verbindungsrohr 5.45 aus dem Mischer 5.42 das zu sinternde Gemisch 5.130 durch das Verbindungsrohr 5.45 in Richtung auf den Trichter 5.92 aus, von dem es über das verschwenkbare Rohr 5.93 zum Rost 5.109 gelenkt wird und sich auf der Schicht 5.106 ablagert. Nachdem das Sinterbett 5.62 eine zum Sintern richtige Schicht 5.105 erreicht hat, wird der Schieber 5.97 verschlossen.

Während dieses Befüllvorganges findet auf einem zweiten stationären Rost 5.107 der Zünd- und Sintervorgang statt. Dabei sintert die Sinterzone 5.64, die parallel zur Rostoberfläche verläuft, durch das Sinterbett 5.62 hindurch. Zu diesem Zwecke wird die an einer Schiene 5.113 verfahrbare Zündhaube 5.50 über den stationären Rost 5.107 gefahren. Die Zündflammen 5.53 zünden die oberfläche des Sinterbettes 5.62. Gleichzeitig sorgt der vom saugzuggebläse 5.23 erzeugte Saugzug, der auch in der Absaughaube 5.05 herrscht, dafür, daß ein Zünden des Sinterbettes 5.62 Stattfinden kann. Während dieser Zeit sorgt ein Ventil 5.112 im Bereich der Absaughaube 5.05 des ersten Stationären Rostes 5.109 dafür, daß in dieser Absaughaube 5.05 kein Unterdruck herrscht. Die entstehenden Abgase 5.08 des zweiten stationären Rost 5.107 werden vom Saugzuggebläse 5.23 abgesaugt und in der bereits oben beschriebenen Weise verwertet.

Während des Zünd- und Sintervorganges im zweiten Stationären Rost 5.107 und dem Füllvorgang im ersten Stationären Rost 5.109 wird in einem dritten Stationären Rost 5.108, in dem der Sintervorgang bereits stattgefunden hat, durch weiteres Durchsaugen von Luft der Sinter gekühlt und anschließend über Kippgelenke 5.101, die an jeder Sinterpfanne angebracht sind, gekippt und damit in den nachgeschalteten Brecher 5.66 über ein geeignetes Fördermittel entleert. Die zum Kühlen benötigte Luft wird über das Ventil 5.111 gesteuert.

Sobald auf dem ersten stationären Rost 5.109 das Sinterbett 5.62 vollständig ausgebildet ist, wird die Zündhaube 5.50 entlang der Schiene 5.113 in Richtung auf den ersten stationären Rost 5.109 verfahren, um das auf diesem Rost 5.109 fertig ausgebildete Sinterbett 5.62 zu zünden. Zu diesem Zwecke wird durch das öffnen des Ventiles 5.112 die Absaughaube 5.05 des ersten Stationären Rostes 5.109 an den vom Saugzuggebläse 5.23 erzeugten Unterdruck angeschlossen.

Inzwischen ist der Zünd- und Sintervorgang auf dem zweiten stationären Rost 5.107 beendet, so daß dieser zweite stationäre Rost 5.107 gekühlt und verschwenkt und damit das durchgesinterte Sinterbett 5.62 in den Brecher 5.66 entladen werden kann. Beim Entleeren wird ein im Saugrohr 5.07 vorgesehenes Ventil 5.110 geschlossen und auf diese weise die Absaughaube 5.05 von dem vom Saugzuggebläse 5.23 erzeugten Unterdruck abgetrennt.

Nach dem Entleeren des dritten Stationären Rostes 5.108 wird das verschwenkbare Rohr 5.93 in Richtung auf den dritten stationären Rost 5.108 verschwenkt, so daß der in seine Ausgangslage verschwenkte dritte stationäre Rost 5.108 nunmehr zunächst mit dem Rostbelag 5.63 und sodann mit dem Gemisch 5.130 aus dem Mischer 5.42 befüllt werden kann.

In der Zwischenzeit findet auf dem ersten Stationären Rost 5.109 der Zünd- und Sintervorgang statt. Dabei verschiebt sich die Sinterzone 5.64 parallel zum Rostboden 5.104 in Richtung auf die Roststäbe 5.102. Dabei ist ein im Saugrohr 5.07 angeordnetes Ventil 5.112 geöffnet, so daß mit Hilfe des vom Saugzuggebläse 5.23 erzeugten Unterdruckes die Abgase 5.08 durch den Rost 5.104 hindurchgesaugt und der bereits beschriebenen Bearbeitung in der Abgasanlage zugeführt werden.

Sobald das Sinterbett 5.62 auf dem ersten Stationären Rost 5.109 mit Hilfe der Zündhaube 5.50 gezündet worden ist, wird die Zündhaube 5.50 entlang der Schiene 5.113 zu dem inzwischen befüllten dritten stationären Rost 5.108 verfahren, so daß das auf diesem ausgebildeten Sinterbett 5.62 gezündet werden kann. Zu diesem Zwecke wird das Ventil 5.111 geöffnet, so daß der vom Saugzuggebläse 5.23 erzeugte Saugzug die Abgase 5.08 durch das Sinterbett 5.62 hindurchsaugen kann.

Inzwischen sintert das Sinterbett 5.62 auf dem ersten stationären Rost 5.109 bis zur Oberfläche der Roststäbe 5.102 bei geöffnetem Ventil 5.112. Das verschwenkbare Rohr 5.93 ist in Richtung auf den zweiten stationären Rost 5.107 verschwenkt, so daß dieser bei geschlossenem Ventil 5.110 erneut mit einem Sinterbett 5.62 gefüllt werden kann.

Auf diese Weise ist eine optimierte Ausnutzung der gesamten Anlage möglich, ohne daß für alle Roste 5.107, 5.108, 5.109 gemeinsame Anlageteile, wie Trichter 5.92 mit verschwenkbarem Rohr 5.93, Mischer 5.42 und Abgasanlage 5.09 mehrfach vorhanden sein müßten.

Der entstehende Sinter 1.65, 3.65, 4.65, 5.65 besitzt im Regelfall einen Eisengehalt von 40 bis 65 %, vorzugsweise von 50 bis 60 % vom Gesamtgewicht. Darüber hinaus besitzt er einen Gehalt von 3 bis 20 %, vorzugsweise 5 bis 10 % an SiO₂ sowie einen Al₂O₃-Gehalt von 1 bis 10 %, vorzugsweise von 1 bis 5 % von seinem Gesamtgewicht. Der Sinter 1.65, 3.65, 4.65, 5.65 besitzt einen Basengrad im Verhältnis CaO zu SiO₂ von 0,8 bis 3, vorzugsweise von 1 bis 2. Sein Bestandteil an MgO beträgt zwischen 0 bis 3 %, vorzugsweise 1 bis 2 % vom Gesamtgewicht.

## Patentansprüche

1. Verfahren zur Verwertung von Reststoffen ( 1.27; 4.27; 5.27) mit einer geringen Partikelgröße, die organische Rückstände und mineralische Bestandteile enthalten bei dem die Reststoffe auf einem Sinterbett (1.62; 2.62; 3.62; 4.62; 5.62) gesintert werden, wobei die organischen Rückstände als Abgase (1.08; 4.08; 5.08) auf dem durch Unterdruck beaufschlagten Sinterbett (1.62; 2.62; 3.62; 4.62; 5.62) entzogen werden und der dabei entstehende Sinter (1.65; 3.65; 4.65; 5.65) und das Abgas (1.08; 4.08; 5.08) getrennt jeweils einer geeigneten Endverwertung zugeführt werden, **dadurch gekennzeichnet, daß** die Reststoffe aus Öl und Eisen enthaltendem Schleifschlamm bestehen, und ein Gemisch aus im Schleifschlamm enthaltenden Eisen- und Mineralienbestandteilen gesintert wird.

2. Verfahren nach Anspruch 1, **dadurch gekennzeichnet, daß** in einem Mischer (1.42, 4.42, 5.42) der Reststoff (1.27, 4.27, 5.27) mit Zuschlagstoffen (1.31, 4.31, 5.31) vermischt und gemeinsam mit diesen einem Sintervorgang zugeführt wird.

3. Verfahren nach Anspruch 1 und 2, **dadurch gekennzeichnet, daß** abhängig von im Reststoff (1.27, 4.27, 5.27) enthaltenen Anteilen brennfähiger Bestandteile dem Reststoff (1.27, 4.27, 5.27) ein Festbrennstoff (1.29, 4.29, 5.29) zugesetzt wird.

4. Verfahren nach Anspruch 3, **dadurch gekennzeichnet, daß** dem Reststoff (1.27, 4.27, 5.27) aus brennfähigen Bestandteilen ein zum Sintern ausreichender Energiegehalt bei deren Verbrennung zugeführt wird, so daß kein Anteil an Festbrennstoff (1.29, 4.29, 5.29) zugesetzt wird.

5. Verfahren nach einem der Ansprüche 1 bis 4, **dadurch gekennzeichnet, daß** dem Reststoff (1.27, 4.27, 5.27) und dem Festbrennstoff (1.29, 4.29, 5.29) Zuschlagstoffe (1.31, 4.31, 5.31) hinzugesetzt und aus diesen drei Mischungskomponenten ein Gemisch (1.130, 4.130, 5.130) hergestellt wird, aus dem ein Sinter (1.65, 3.65, 4.65, 5.65) mit einer jeweils gewünschten Qualität hergestellt wird.

6. Verfahren nach Anspruch 5, **dadurch gekennzeichnet, daß** als Zuschlagstoff (1.31, 4.31, 5.31) aus dem Sinter (1.65, 3.65, 4.65, 5.65) nach Ablauf des Sinterprozesses abgesiebte Feinbestandteile (1.75, 4.75, 5.75) zugesetzt werden.

7. Verfahren nach einem oder allen der Ansprüche 1 bis 6, **dadurch gekennzeichnet, daß** das Gemisch (1.130, 4.130, 5.130) als ein Sinterbett (1.62, 2.62, 3.62, 4.62, 5.62) mit einer gleichmäßigen Dicke (3.105) auf einen Rost (1.00, 2.00, 3.00, 4.105, 5.104) aufgegeben wird.

8. Verfahren nach Anspruch 7, **dadurch gekennzeichnet, daß** die Dicke des Sinterbettes (1.00, 2.00, 3.00) abhängig von einem im Gemisch (1.130, 4.130, 5.130) enthaltenen Mischungsverhältnis einzelner Komponenten bemessen wird.

9. Verfahren nach einem oder allen der Ansprüche 1 bis 8, **dadurch gekennzeichnet, daß** ein Sintervorgang in einer Sinterzone (1.64, 3.64, 4.64) vorgenommen wird, und organische Rückstände in einer Sinterfront (3.98, 4.98, 5.98) als Komponenten des Abgases (1.08, 4.08, 5.08) ausgetrieben werden, die der Sinterzone (1.64, 3.64, 4.64, 5.64) in Richtung der durch das Sinterbett (1.62, 2.62, 3.62, 4.62, 5.62) abgesaugten Abgase (1.08, 4.08, 5.08) voran verläuft.

10. Verfahren nach einem oder beiden der Ansprüche 8 und/oder 9, **dadurch gekennzeichnet, daß** das Sinterbett (1.62, 2.62 3.62) als eine Schicht (3.105) auf den Wanderrost (1.00, 2.00, 3.00) aufgebracht wird, deren Dicke mit einer Vorschubgeschwindigkeit des Wanderrostes (1.00, 2.00, 3.00) und einem das Sinterbett (1.00, 2.00, 3.00) beaufschlagenden Unterdruck zur Erzeugung eines jeweils gewünschten Sinters (1.65, 3.65) abgestimmt wird.

11. Verfahren nach einem oder allen der Ansprüche 8 bis 10, **dadurch gekennzeichnet, daß** der Wanderrost (1.00, 2.00, 3.00) aufgrund eines Regelvorganges so gesteuert wird, daß an seinem Ende (1.91) das Sinterbett (1.62, 2.62, 3.62) von seiner Oberseite (1.90) bis zum Rostbelag (1.63, 2.63, 7.63) durchgesintert ist und aus dem Sinterbett (1.62, 2.62, 3.62) sämtliche organischen Rückstände entfernt sind.

12. Verfahren nach Anspruch 11, **dadurch gekennzeichnet, daß** mittelgroße Sinterstücke (1.71, 4.71, 5.71) von ca. 10 bis 20 mm größter Abmessung als Rostbelag (1.63, 2.63, 3.63, 4.63, 5.63) auf den Rost (1.00, 2.00, 3.00, 4.99, 5.107, 5.108, 5.109) zurückgeführt werden, dessen Roststäbe (4.102, 5.102, 6.102) vom Rostbelag (1.63, 2.63, 3.63, 4.63, 5.63) vor zu starker Überhitzung geschützt werden.

13. Verfahren nach einem oder allen Ansprüchen 1 bis 12, **dadurch gekennzeichnet, daß** im Bereich der Absaughauben (1.05) Abgastemperaturen der jeweils aus dem Sinterbett (1.62, 2.62, 3.62, 4.62, 5.62) austretenden Abgase (1.08, 4.08, 5.08) gemessen werden und aufgrund der auf diese Weise gemessenen Temperaturen auf die im Sinterbett (1.62, 2.62, 3.62, 4.62, 5.62) auftretenden Temperaturen geschlossen wird.

14. Verfahren nach einem oder allen der Ansprüche 8 bis 13, **dadurch gekennzeichnet, daß** die Vorschubgeschwindigkeit des Wanderrostes (1.00, 2.00, 3.00) und der unterhalb seines Obertrumms (1.01, 2.01, 3.01) herrschende Unterdruck abhängig von der im Sinterbett (1.62, 2.62, 3.62) herrschenden Temperatur geregelt werden.

15. Verfahren nach einem oder allen der'Ansprüche 8 bis 13, **dadurch gekennzeichnet, daß** die Vorschubgeschwindigkeit und der Unterdruck abhängig von der in der Sinterzone (1.64, 3.64) herrschenden Temperatur geregelt werden.

16. Verfahren nach einem oder allen der Ansprüche 1 bis 9, 12 und/oder 13, **dadurch gekennzeichnet, daß** ein Rostbelag (4.63, 5.63) und auf diesen ein Sinterbett (4.62, 5.62) auf einen Rostboden (4.104, 5.104) eines stationären Rostes (4.99, 5.99) aufgebracht, mit Hilfe einer Zündhaube (4.50, 5.50) an seiner Oberseite (1.90) gezündet und in Richtung auf den Rostboden (4.104, 5.104) durchgesintert wird, wobei die Sinterzone (4.64, 5.64) planparallel zur Oberfläche des Rostbodens (4.104, 5.104) durch das Sinterbett (4.62, 5.62) durchgesaugt wird.

17. Verfahren nach einem oder allen der Ansprüche 1 bis 16, **dadurch gekennzeichnet, daß** in einer Sinterzone (1.64, 3.64, 4.64, 5.64) eine in Abhängigkeit vom aufgegebenen Material in weiten Grenzen schwankende Temperatur von 1300 °C +/- 500 °C erzeugt wird.

18. Verfahren nach einem der Ansprüche 1 bis 17, **dadurch gekennzeichnet, daß** abgesiebte Sinterstücke (1.67, 1.72, 4.67, 4.72, 5.67, 5.72) je nach ihrer Zusammensetzung in eine Eisengewinnung eingeführt werden.

19. Verfahren nach einem der Ansprüche 1 bis 17, **dadurch gekennzeichnet, daß** die Sinterstücke (1.67, 1.72, 4.67, 4.72, 5.67, 5.72) je nach ihrer Zusammensetzung als Baustoff verwendet werden.

20. Verfahren nach einem der Ansprüche 1 bis 19, **dadurch gekennzeichnet, daß** beim Sintern entstehendes Abgas (1.08, 4.08, 5.08) in eine Abgasanlage (1.09, 4.09, 5.09) abgeführt wird.

21. Verfahren nach Anspruch 20, **dadurch gekennzeichnet, daß** das Abgas (1.08, 4.08, 5.08) mindestens teilweise kondensiert wird und mindestens Teile eines dabei entstehenden Kondensats verbrannt werden.

22. Verfahren nach einem oder beiden der Ansprüche 20 und/oder 21, **dadurch gekennzeichnet, daß** die Abgase (1.08, 4.08, 5.08) in thermischer Nachverbrennung gereinigt werden.

23. Verfahren nach einem oder allen der Ansprüche 20 bis 22, **dadurch gekennzeichnet, daß** ein in einer thermischen Nachverbrennung (1.14, 2.14, 4.14, 5.14) nachverbranntes Abgas zum Ausscheiden chlorhaltiger Verbindungen in einem geeigneten Aggregat nachbehandelt wird.

24. Verfahren nach einem oder allen der Ansprüche 1 bis 23, **dadurch gekennzeichnet, daß** das Gemisch (1.130, 4.130, 5.130) vor seiner Aufgabe auf den Rost (1.00, 2.00, 3.00, 4.99, 5.99) zur Optimierung seiner Luftdurchlässigkeit und somit zur Qualitätsverbesserung des Sinters (1.65, 4.65, 5.65) granuliert wird.

## Claims

1. A method of utilising residual substances (1.27; 4.27; 5.27) of a small particle size which contain organic residues and mineral constituents, In which the residual substances are sintered on a sintering bed (1.62; 2.62; 3.62; 4.62; 5,62), wherein the organic residues are removed in the form of waste gases (1.08; 4.08; 5.08) on the sintering bed (1.62; 2.62; 3.62; 4.62; 5.62) which Is acted upon by reduced pressure and the sinter (1.65; 3.65; 4.65; 5.65) which is produced In that operation and the waste gas (1.08; 4.08; 5.08) are each fed separately to a respective appropriate final utilisation, **characterised in that** the residual substances comprise grinding swarf containing oil and iron and a mixture of iron and mineral constituents contained in the grinding swarf is sintered.

2. A method according to claim 1 **characterised in that** the residual substance (1.27, 4.27, 5.27) is mixed with additives (1.31, 4.31, 5.31) in a mixer (1.42, 4.42, 5.42) and fed together with the additives to a sintering operation.

3. A method according to claim 1 and claim 2 **characterised In that** a solid fuel (1.29, 4.29, 5.29) is added to the residual substance (1.27, 4.27, 5.27) in dependence on proportions of combustible constituents, which are contained In the residual substance (1.27, 4.27, 5.27).

4. A method according to claim 3 **characterised In that** an energy content sufficient for the sintering operation is fed to the residual substance (1.27, 4.27, 5.27) comprising combustible constituents upon combustion thereof so that no proportion of solid fuel (1.29, 4.29, 5.29) is added.

5. A method according to one of claims 1 to 4 **characterised In that** additive substances (1.31, 4.31, 5.31) are added to the residual substance (1.27, 4.27, 5.27) and the solid fuel (1.29, 4.29, 5.29) and a mixture (1.130, 4.130, 5.130) is made from those three mixture components, from which mixture Is produced a sinter (1.65, 3.65, 4.65, 5.65) of a respectively desired quality.

6. A method according to claim 5 **characterised in that** fine constituents (1.75, 4.75, 5.75) which are sieved out of the sinter (1.65, 3.65, 4.65, 5.65) after implementation of the sintering procedure are added as additive (1.31, 4.31, 5.31).

7. A method according to one or all of claims 1 to 6 **characterised In that** the mixture (1.130, 4.130, 5.130) is put in the form of a sintering bed (1.62, 2.62, 3.62, 4.62, 5.62) of a uniform thickness (3.105) on to a grid (1.00, 2.00, 3.00, 4.105, 5.104).

8. A method according to claim 7 **characterised In that** the thickness of the sintering bed (1.00, 2.00, 3.00) is of a dimension In dependence on a mixing ratio, contained in the mixture (1.130, 4.130, 5.130), of Individual components thereof.

9. A method according to one or all of claims 1 to 8 **characterised in that** a sintering operation is carried out in a sintering zone (1.64, 3.64, 4.64) and organic residues are expelled in a sintering front (3.98, 4.98, 5.98) as components of the waste gas (1.08, 4.08, 5.08), which sintering front leads the sintering zone (1.64, 3.64, 4.64, 5.64) in the direction of the waste gases (1.08, 4.08, 5.08) which are sucked away through the sintering bed (1.62, 2.62, 3.62, 4.62, 5.62).

10. A method according to one or both of claims 8 and/or 9 **characterised In that** the sintering bed (1.62, 2.62, 3.62) is applied in the form of a layer (3.105) to the travelling grid (1.00, 2.00, 3.00), the thickness thereof being matched to a speed of forward movement of the travelling grid (1.00, 2.00, 3.00) and a reduced pressure acting on the sintering bed (1.00, 2.00, 3.00) to produce a respectively desired sinter (1.65, 3.65).

11. A method according to one or all of claims 8 to 10 **characterised In that** the travelling grid (1.00, 2.00, 3.00) is so controlled on the basis of a regulating procedure that at its end (1.91) the sintering bed (1.62, 2.62, 3.62) is sintered therethrough from its top side (1.90) to the grid bedding layer (1.63, 2.63, 7.63) and all organic residues are removed from the sintering bed (1.62, 2.62, 3.62).

12. A method according to claim 11 **characterised in that** medium-size sinter portions (1.71, 4.71, 5.71) of about 10 to 20 mm largest dimension are retumed as the grid bedding layer (1.63, 2.63, 3.63, 4.63, 5.63) on to the grid (1.00, 2.00, 3.00, 4.99, 5.107, 5.108, 5.109), the grid bars (4.102, 5.102, 6.102) of which are protected from excessively severe overheating by the grid bedding layer (1.63, 2.63, 3.63, 4.63, 5.63).

13. A method according to one or all of claims 1 to 12 **characterised In that** in the region of the suction removal hoods (1.05) waste gas temperatures of the waste gases (1.08, 4.08, 5.08) respectively issuing from the sintering bed (1.62, 2.62, 3.62, 4.62, 5.62) are measured and the temperatures occurring In the sintering bed (1.62, 2.62, 3.62, 4.62, 5.62) are inferred on the basis of the temperatures measured **in that** way.

14. A method according to one or all of claims 8 to 13 **characterised in that** the speed of forward movement of the travelling grid (1.00, 2.00, 3.00) and the reduced pressure obtaining beneath the top run (1.01, 2.01, 3.01) thereof are regulated in dependence on the temperature obtaining in the sintering bed (1.62, 2.62, 3.62).

15. A method according to one or all of claims 8 to 13 **characterised In that** the speed of forward movement and the reduced pressure are regulated In dependence on the temperature obtaining in the sintering zone (1.64, 3.64).

16. A method according to one or all of claims 1 to 9, 12 and/or 13 **characterised in that** a grid bedding layer (4.63, 5.63) and thereon a sintering bed (4.62, 5.62) are disposed on a grid bottom (4.104, 5.104) of a stationary grid (4.99, 5.99), fired at its top side (1.90) by means of a firing hood (4.50, 5.50) and sintered therethrough in a direction towards the grid bottom (4.104, 5.104), wherein the sintering zone (4.64, 5.64) is sucked through the sintering bed (4.62, 5.62) in plane-parallel relationship with the surface of the grid bottom (4.104, 5.104).

17. A method according to one or all of claims 1 to 16 **characterised in that** a temperature of 1300°C +/- 500°C which fluctuates within wide limits in dependence on the supplied material is produced in a sintering zone (1.64, 3.64, 4.64, 5.64).

18. A method according to one of claims 1 to 17 **characterised in that** sinter portions (1.67, 1.72, 4.67, 4.72, 5.67, 5.72) which are sieved off are introduced Into an iron production procedure according to their respective composition.

19. A method according to one of claims 1 to 17 **characterised in that** the sinter portions (1.67, 1.72, 4.67, 4.72, 5.67, 5.72) are used as building material according to their respective composition.

20. A method according to one of claims 1 to 19 **characterised in that** waste gas (1.08, 4.08, 5.08) which occurs in the sintering operation is discharged into a waste gas installation (1.09, 4.09, 5.09).

21. A method according to claim 20 **characterised in that** the waste gas (1.08, 4.08, 5.08) is at least partially condensed and at least parts of a condensate which Is produced **in that** situation are burnt.

22. A method according to one or both of claims 20 and/or 21 **characterised In that** the waste gases (1.08, 4.08, 5.08) are cleaned in a thermal post-combustion procedure.

23. A method according to one or all of claims 20 to 22 **characterised in that** a waste gas which is subjected to post-combustion in a thermal post-combustion procedure (1.14, 2.14, 4.14, 5.14) is subjected to a post-treatment In a suitable unit for separating off chlorine-bearing compounds.

24. A method according to one or all of claims 1 to 23 **characterised in that** before it is fed on to the grid (1.00, 2.00, 3.00, 4.99, 5.99) the mixture (1.130, 4.130, 5.130) is granulated to optimise its air permeability and thus to improve the quality of the sinter (1,65, 4.65, 5.65).

## Revendications

1. Procédé de valorisation de résidus (1.27 ; 4.27 ; 5.27) à faible taille de particules, contenant des résidus organiques et des composants minéraux, dans lequel les résidus sont frittés sur un lit de frittage (1.62 ; 2.62 ; 3.62 ; 4.62 ; 5.62), les résidus organiques étant éliminés sous forme de gaz d'échappement (1.08 ; 4.08 ; 5.08) du lit de frittage (1.62 ; 2.62 ; 3.62 ; 4.62 ; 5.62) auquel est appliquée une pression réduite, et le produit fritté formé (1.65 ; 3.65 ; 4.65 ; 5.65) et le gaz d'échappement (1.08 ; 4.08 ; 5.08) étant envoyés séparément vers une application de valorisation appropriée, **caractérisé par le fait que** les résidus sont constitués d'une boue de ponçage contenant du huile et du fer et que la procédé comprend le frittage d'un mélange de fer et de composants minéraux contenu dans la boue de ponçage.

2. Procédé selon la revendication 1, **caractérisé par le fait que** l'on mélange le résidu (1.27, 4.27, 5.27) dans un mélangeur (1.42, 4.42, 5.42) avec des additifs (1.31, 4.31, 5.31) et que l'on soumet l'ensemble à un frittage.

3. Procédé selon la revendication 1 ou 2, **caractérisé par le fait que** l'on ajoute au résidu (1.27, 4.27, 5.27), en fonction de sa teneur en composants combustibles, un combustible solide (1.29, 4.29, 5.29).

4. Procédé selon la revendication 3, **caractérisé par le fait que** l'énergie fournie par la combustion des composants combustibles du résidu (1.27, 4.27, 5.27) est suffisante, et qu'il n'est de ce fait pas nécessaire d'ajouter du combustible solide (1.29, 4.29, 5.29).

5. Procédé selon l'une des revendications 1 à 4, **caractérisé par le fait que** l'on ajoute au résidu (1.27, 4.27, 5.27) et au combustible solide (1.29, 4.29, 5.29) des additifs (1.31, 4.31, 5.31) et que l'on prépare à partir de ces trois composants un mélange (1.130,4.130,5.130) à partir duquel on fabrique un produit fritté (1.65, 3.65, 4.65, 5.65) ayant la qualité recherchée.

6. Procédé selon la revendication 5, **caractérisé par le fait que** l'on ajoute en tant qu'additif (1.31, 4.31, 5.31) de fines particules (1.75, 4.75, 5.75) obtenues par tamisage après frittage du produit fritté (1.65, 3.65, 4.65, 5.65).

7. Procédé selon l'une quelconque des revendications 1 à 6, **caractérisé par le fait que** le mélange (1.130, 4.130, 5.130) est déposé sur une grille (1.00, 2.00, 3.00, 4.105, 5.104) sous forme d'un lit de frittage (1.62, 2.62, 3.62, 4.62, 5.62) ayant une épaisseur régulière (3.105).

8. Procédé selon la revendication 7, **caractérisé par le fait que** l'épaisseur du lit de frittage (1.00, 2.00, 3.00) dépend du rapport de mélange des composants dans le mélange (1.130, 4.130, 5.130).

9. Procédé selon l'une quelconque des revendications 1 à 8, **caractérisé par le fait qu'**il comprend une étape de frittage dans une zone de frittage (1.64, 3.64, 4.64) et que des résidus organiques sont séparés en tant que composant du gaz d'échappement (1.08, 4.08, 5.08), dans un front de frittage (3.98, 4.98, 5.98) qui évolue, devant la zone de frittage (1.64, 3.64, 4.64, 5.64) dans le sens des gaz d'échappement (1.08, 4.08, 5.08) aspirés à travers le lit de frittage (1.62, 2.62, 3.62, 4.62, 5.62).

10. Procédé selon la revendication 8 et/ou 9, **caractérisé par le fait que** le lit de frittage (1.62, 2.62, 3.62) est déposé sous forme d'une couche (3.105) sur une grille mobile (1.00, 2.00, 3.00), laquelle épaisseur dépend de la vitesse d'avancement de la grille mobile (1.00, 2.00, 3.00) et de la pression réduite à laquelle est soumis le lit de frittage (1.00, 2.00, 3.00) pour l'obtention d'un produit fritté (1.65, 3.65) ayant les propriétés recherchées.

11. Procédé selon l'une quelconque des revendications 8 à 10, **caractérisé par le fait que** la vitesse d'avancement de la grille mobile (1.00, 2.00, 3.00) est régulée de manière à ce qu'à son extrémité (1.91) le lit de frittage (1.62, 2.62, 3.62) soit fritté sur toute l'épaisseur allant de sa surface supérieure (1.90) jusqu'au revêtement de grille (1.63, 2.63, 7.63), et que tous les résidus organiques soient éliminés du lit de frittage (1.62, 2.62, 3.62).

12. Procédé selon la revendication 11, **caractérisé par le fait que** des morceaux frittés (1.71, 4.71, 5.71) de taille moyenne ayant une dimension maximale d'environ 10 à 20 mm sont recyclés vers la grille (1.00, 2.00, 3.00, 4.99, 5.107, 5.108, 5.109) en tant que revêtement de grille (1.63, 2.63, 7.63), les barreaux de la grille (4.102, 5.102, 6.102) étant protégées par le revêtement de grille (1.63, 2.63, 3.63, 4.63, 5.63) contre un chauffage excessif.

13. Procédé selon l'une quelconque des revendications 1 à 12, **caractérisé par le fait que** l'on mesure dans la zone des hottes d'aspiration (1.05) la température des gaz d'échappement (1.08, 4.08, 5.08) sortant du lit de frittage (1.62, 2.62, 3.62, 4.62, 5.62) et que l'on déduit des températures mesurées ainsi les températures à l'intérieur du lit de frittage (1.62, 2.62, 3.62, 4.62, 5.62).

14. Procédé selon l'une quelconque des revendications 8 à 13, **caractérisé par le fait que** la vitesse d'avancement de la grille mobile (1.00, 2.00, 3.00) et la pression réduite appliquée au niveau du brin supérieur (1.01, 2.01, 3.01) de celle-ci sont réglés en fonction de la température à l'intérieur du lit de frittage (1.62, 2.62, 3.62, 4.62, 5.62).

15. Procédé selon l'une quelconque des revendications 8 à 13, **caractérisé par le fait que** la vitesse d'avancement et la pression réduite appliquée sont réglées en fonction de la température dans la zone de frittage (1.64, 3.64).

16. Procédé selon l'une quelconque des revendications 1 à 9, 12 et/ou 13, **caractérisé par le fait que** l'on applique un revêtement de grille (4.63, 5.63) et, sur celui-ci, un lit de frittage (4.62, 5.62) sur un plancher de grille (4.104, 5.104) d'une grille stationnaire (4.99, 5.99), que l'on allume l'ensemble à l'aide d'une hotte d'allumage (4.50, 5.50) au niveau de sa surface supérieure (1.90) et que le frittage se fait en direction du plancher de grille (4.104, 5.104), la zone de frittage (4.64, 5.64) étant soumise à une aspiration parallèle au plan de la surface du plancher de grille (4.104, 5.104) et à travers le lit de frittage (4.62, 5.62).

17. Procédé selon l'une quelconque des revendications 1 à 16, **caractérisé par le fait que** l'on ajuste la température dans une zone de frittage (1.64, 3.64, 4.64, 5.64) en fonction du matériau à traiter à une valeur variable de 1300 °C ± 500 °C.

18. Procédé selon l'une quelconque des revendications 1 à 17, **caractérisé par le fait que** des morceaux frittés (1.67, 1.72, 4.67, 4.72, 5.67, 5.72) séparés par tamisage sont utilisés, en fonction de leur composition, pour la fabrication de fer.

19. Procédé selon l'une quelconque des revendications 1 à 17, **caractérisé par le fait que** des morceaux frittés (1.67, 1.72, 4.67, 4.72, 5.67, 5.72) sont utilisés, en fonction de leur composition, en tant que matériau pour la construction.

20. Procédé selon l'une quelconque des revendications 1 à 19, **caractérisé par le fait que** les gaz d'échappement (1.08, 4.08, 5.08) formés lors du frittage sont envoyésvers une installation de traitement de gaz d'échappement (1.09, 4.09, 5.09).

21. Procédé selon la revendication 20, **caractérisé par le fait que** le gaz d'échappement (1.08, 4.08, 5.08) est au moins partiellement condensé et que le condensat obtenu est au moins partiellement brûlé.

22. Procédé selon la revendication 20 et/ou 21, **caractérisé par le fait que** les gaz d'échappement (1.08, 4.08, 5.08) sont épurés par postcombustion thermique.

23. Procédé selon l'une quelconque des revendications 20 à 22, **caractérisé par le fait qu'**un gaz d'échappement soumis à une postcombustion thermique (1.14, 2.14, 4.14, 5.14) est traité, pour que l'on puisse le rejeter, dans un dispositif approprié permettant de séparer des composés chlorés.

24. Procédé selon l'une quelconque des revendications 1 à 23, **caractérisé par le fait que** le mélange (1.130, 4.130, 5.130) est soumis à une granulation avant d'être déposé sur la grille (1.00, 2.00, 3.00, 4.99, 5.99) afin d'optimiser sa perméabilité à l'air et d'améliorer la qualité du produit fritté (1.65, 4.65, 5.65).
